(19)

Europäisches
Patentamt
European
Patent Office
Office européen
des brevets

(11) **EP 3 346 747 A1**

(12) **EUROPEAN PATENT APPLICATION**
published in accordance with Art. 153(4) EPC

(43) Date of publication:
**11.07.2018 Bulletin 2018/28**

(21) Application number: **16841561.0**

(22) Date of filing: **22.08.2016**

(51) Int Cl.:
*H04W 16/28* (2009.01)        *H04W 28/02* (2009.01)
*H04W 88/08* (2009.01)

(86) International application number:
**PCT/JP2016/074375**

(87) International publication number:
**WO 2017/038529 (09.03.2017 Gazette 2017/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.08.2015 JP 2015170226**

(71) Applicant: **NEC Corporation
Tokyo 108-8001 (JP)**

(72) Inventor: **OKETANI, Kengo
Tokyo 108-8001 (JP)**

(74) Representative: **MacDougall, Alan John Shaw et al
Mathys & Squire LLP
The Shard
32 London Bridge Street
London SE1 9SG (GB)**

(54) **APPARATUS AND SYSTEM RELATED TO WIRELESS ACCESS NETWORK**

(57)    To enable reduction of the amount of information transmitted from one node to the other node, the nodes sharing processing in a radio access network. An apparatus of the present invention includes: an information generation unit configured to generate channel information for a terminal apparatus by performing channel estimation based on uplink signals transmitted by the terminal apparatus; a selection unit configured to select candidate channel information corresponding to the generated channel information from among a group of predetermined candidate channel information; and a notification unit configured to notify a first node, which performs scheduling for the terminal apparatus, of indication information indicating the selected candidate channel information.

Figure 8

**Description**

**Background of the Invention**

Technical Field

The present invention relates to apparatuses and a system relating to a radio access network.

Background Art

In the long term evolution (LTE)/LTE-Advanced of the 3rd Generation Partnership Project (3GPP), evolved Nodes B (eNBs) configure a radio access network (RAN) to perform radio communication with a user equipment (UE). As specified in NPL 1, each eNB performs, for radio communication with UE, processing of the physical layer, which corresponds to Layer 1, as well as the media access control (MAC), the radio link control (RLC), and the packet data convergence protocol (PDCP), which correspond to Layer 2. For example, information generated in Layer 1 and necessary in Layer 2 is provided from Layer 1 to Layer 2. Specifically, for example, information (e.g., channel information) necessary for scheduling in Layer 2 (specifically, the MAC) is provided from Layer 1 to Layer 2.

Meanwhile, for next-generation communication systems, there is a discussion about arranging multiple remote nodes (which may also be referred to as remote radio units (RRUs), for example) covering respective communication areas and a centralized node (which may also be referred to as a baseband unit (BBU), for example) connected to the remote nodes, instead of multiple eNBs covering respective communication areas. In such an arrangement, the remote nodes and the centralized node share processing in the RAN. As an example, the remote nodes may perform physical-layer processing, and the centralized node may perform Layer-2 processing (e.g., scheduling and the like).

Citation List

Non Patent Literature

[NPL 1] 3GPP TS 36.300 V13.0.0 (2015-06) 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 13)

**Summary of the Invention**

Technical Problem

In the case where the remote nodes and the centralized node share, as described above, processing of the layers as that described in NPL 1, the remote nodes each notify the centralized node of information (e.g., channel information) generated by the remote node and necessary for the processing (e.g., scheduling) to be performed by the centralized node. In addition, the centralized node notifies a corresponding remote node of information (e.g., scheduling information) generated by the centralized node and necessary for processing (e.g., mapping of signals to radio resources) to be performed by the remote node.

However, since the band of the transmission line (e.g., an optical fiber line) between each of the remote nodes and the centralized node is limited, an increase in the amount of information transmitted and received between the remote node and the centralized node may tighten the band.

An example object of the present invention is to be able to reduce the amount of information transmitted from one node to the other node, the nodes sharing processing in a radio access network.

Solution to Problem

A first apparatus according to an example aspect of the present invention includes: an information generation unit configured to generate channel information for a terminal apparatus by performing channel estimation based on uplink signals transmitted by the terminal apparatus; a selection unit configured to select candidate channel information corresponding to the generated channel information from among a group of predetermined candidate channel information; and a notification unit configured to notify a first node, which performs scheduling for the terminal apparatus, of indication information indicating the selected candidate channel information.

A second apparatus according to an example aspect of the present invention includes: an information acquisition unit configured to acquire, from a second node which generates channel information for a terminal apparatus by performing channel estimation based on uplink signals transmitted by the terminal apparatus and selects candidate channel information corresponding to the generated channel information from among a group of predetermined candidate channel information, indication information indicating the selected candidate channel information; and a control unit configured to perform scheduling for the terminal apparatus based on the indication information.

A third apparatus according to an example aspect of the present invention includes: a transmit processing unit configured to transmit uplink signals to a second node which generates channel information by performing channel estimation based on the uplink signals, selects candidate channel information corresponding to the generated channel information from among a group of predetermined candidate channel information, and notifies a first node of indication information indicating the selected candidate channel information; and a receive processing unit configured to receive downlink signals transmitted by the second node based on a result of scheduling performed by the first node based on the indication information.

A system according to an example aspect of the present invention includes: a first node; and a second node connected to the first node, wherein the second node generates channel information for a terminal apparatus by performing channel estimation based on uplink signals transmitted by the terminal apparatus, selects candidate channel information corresponding to the generated channel information from among a group of predetermined candidate channel information, and notifies the first node of indication information indicating the selected candidate channel information, and the first node acquires the indication information from the second node, and performs scheduling for the terminal apparatus based on the indication information. Advantageous Effects of Invention

According to the present invention, it is possible to reduce the amount of information transmitted from one node to the other node, the nodes sharing processing in a radio access network. Note that the present invention may exert other advantageous effects instead of the above advantageous effects or together with the above advantageous effects.

**Brief Description of Drawings**

FIG. 1 is an explanatory diagram for describing an example of an LTE/LTE-Advanced RAN.
FIG. 2 is an explanatory diagram for describing an example of schematic processing in an eNB.
FIG. 3 is an explanatory diagram illustrating an example of a schematic configuration of a system according to an example embodiment of the present invention.
FIG. 4 is an explanatory diagram for describing an example of sharing of processing between remote nodes and a centralized node.
FIG. 5 is a block diagram illustrating an example of a schematic configuration of a remote node according to a first example embodiment.
FIG. 6 is a block diagram illustrating an example of a schematic configuration of a centralized node according to the first example embodiment.
FIG. 7 is a block diagram illustrating an example of a schematic configuration of a terminal apparatus according to the first example embodiment.
FIG. 8 is a sequence diagram illustrating an example of a schematic flow of processing relating to a first technical feature of the first example embodiment.
FIG. 9 is a sequence diagram illustrating an example of a schematic flow of first processing relating to a second technical feature of the first example embodiment.
FIG. 10 is a sequence diagram illustrating an example of a schematic flow of second processing relating to the second technical feature of the first example embodiment.
FIG. 11 is a sequence diagram illustrating an example of a schematic flow of processing relating to a third technical feature of the first example embodiment.
FIG. 12 is a sequence diagram illustrating an example of a schematic flow of processing relating to a fourth technical feature of the first example embodiment.
FIG. 13 is a block diagram illustrating an example of a schematic configuration of a remote node according to a second example embodiment.
FIG. 14 is a block diagram illustrating an example of a schematic configuration of a centralized node according to the second example embodiment.
FIG. 15 is a block diagram illustrating an example of a schematic configuration of a terminal apparatus according to the second example embodiment.
FIG. 16 is a sequence diagram illustrating an example of a schematic flow of processing according to the second example embodiment.

**Description of Example Embodiments**

Example embodiments will be described in detail below with reference to the accompanying drawings. Note that, in the present description and drawings, elements to which the same or similar descriptions are applicable are denoted by the same reference signs, whereby overlapping descriptions may be omitted.

Descriptions will be given in the following order.

1. Related Art
2. Overview of Example Embodiments
3. Example of Configuration of System
4. First Example Embodiment

4.1. Example of Configuration of Remote Node
4.2. Example of Configuration of Centralized Node
4.3. Example of Configuration of Terminal Apparatus
4.4. Technical Features

5. Second Example Embodiment

5.1. Example of Configuration of Remote Node
5.2. Example of Configuration of Centralized Node
5.3. Example of Configuration of Terminal Apparatus
5.4. Technical Feature

<<1. Related Art>>

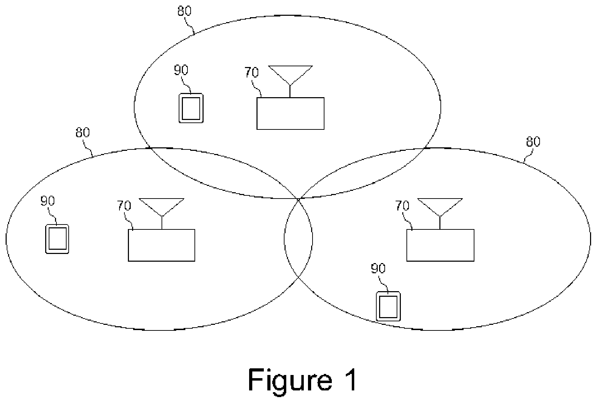

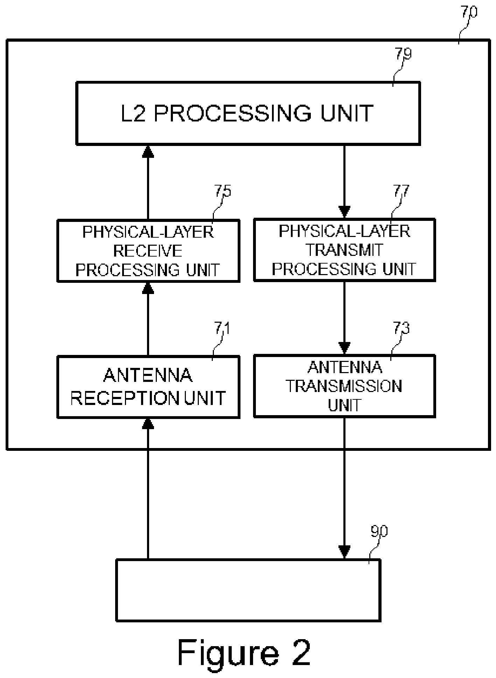

With reference to FIG. 1 and FIG. 2, an overview of an LTE/LTE-Advanced RAN is described.

FIG. 1 is an explanatory diagram for illustrating an example of the LTE/LTE-Advanced RAN. With reference to FIG. 1, eNBs 70 and UEs 90 are illustrated. For example, each of the eNBs 70 covers a communication area 80 of the eNB 70 itself and performs radio communication with the UE 90 located within the communication area 80 of the eNB 70 itself. The communication area 80 is also referred to as a cell or a coverage area.

FIG. 2 is an explanatory diagram for illustrating an example of schematic processing in the eNB. With reference to FIG. 2, the eNB 70 and the UE 90 are illustrated. For example, the eNB 70 includes an antenna reception unit 71, an antenna transmission unit 73, a physical-layer receive processing unit 75, a physical-layer transmit processing unit 77, and an L2 processing unit 79.

The antenna reception unit 71 receives uplink signals transmitted from the UE, converts each analog signal into a digital signal, and provides the digital signal to the physical-layer receive processing unit 75. The physical-layer receive processing unit 75 performs physical-layer processing and provides uplink data and control information to the L2 processing unit 79. Moreover, for example, the physical-layer receive processing unit 75 calculates measurement information, such as channel information and a channel quality indicator (CQI), in the physical-layer processing (e.g., channel estimation, demodulation, and the like) and notifies the L2 processing unit 79 of the measurement information. The channel information is a set of channel estimation values, for example, a channel vector or a channel matrix.

The L2 processing unit 79 includes a scheduler (e.g., a proportional fair (PF) scheduler) and performs scheduling on the basis of the channel information and the CQI. More specifically, for example, the L2 processing unit 79 performs, for each UE, optimal allocation of radio resources, performs adaptive modulation coding (AMC), and determines weights for spatial multiplexing or beamforming. The L2 processing unit 79 then provides downlink data and control information to the physical-layer transmit processing unit 77 and also notifies the physical-layer transmit processing unit 77 of scheduling information (a result of the scheduling) necessary for the physical-layer transmit processing unit 77.

The physical-layer transmit processing unit 77 performs the processing for transmitting downlink signals on the basis of the scheduling information. Specifically, the physical-layer transmit processing unit 77 performs modulation, coding, mapping of signals to radio resources, multiplication of the weights for spatial multiplexing or beamforming, and the like. The physical-layer transmit processing unit 77 then provides a digital signal obtained as a result of the transmit processing, to the antenna transmission unit 73. The antenna transmission unit 73 converts the digital signal into an analog signal and transmits downlink signals.

<<2. Overview of Example Embodiments>>

Next, an overview of example embodiments is described.

(1) Technical Problems

For next-generation communication systems, there is a discussion about arranging multiple remote nodes (which may also be referred to as RRUs, for example) covering respective communication areas and a centralized node (which may also be referred to as a BBU, for example) connected to the remote nodes, instead of multiple eNBs covering respective communication areas. In such a configuration, the remote nodes and the centralized node share processing in the RAN. As an example, the remote nodes may perform physical-layer processing, and the centralized node may perform Layer-2 processing (e.g., scheduling and the like).

(a) First Technical Problem

As described above, in the case where the remote nodes and the centralized node share processing of the layers, the remote nodes each notify the centralized node of information (e.g., channel information) generated by the remote node and necessary for processing (e.g., scheduling) to be performed by the centralized node. Moreover, the centralized node notifies each of the remote nodes of information (e.g., scheduling information) generated by the centralized node and necessary for processing (e.g., mapping of signals to radio resources) to be performed by the remote node.

However, since the band of the transmission line (e.g., an optical fiber line) between each of the remote nodes and the centralized node is limited, an increase in the amount of information transmitted and received between the remote node and the centralized node may tighten the band.

In view of this, it is desirable to reduce the amount of information transmitted from one node to the other node, the nodes sharing the processing in the centralized node.

(b) Second Technical Problem

Even when the remote nodes and the centralized node share processing of the layers as described above, the processing amount of the centralized node may be extremely large, since the centralized node is connected to multiple remote nodes, for example. In particular, the processing amount of the centralized node in scheduling may be extremely large. For example, when spatial multiplexing or beamforming is employed, the processing amount in the scheduling may be enormous.

Hence, it is desirable to reduce the processing of scheduling in the centralized node.

(2) Technical Features

First to fourth technical features according to the example embodiments are described.

(a) First Technical Feature

In the example embodiments, for example, the remote node notifies the centralized node of indication information indicating candidate channel information (e.g., the index of the candidate channel information) corresponding to channel information, instead of notifying the centralized node of the channel information itself generated by performing channel estimation. The centralized node then performs scheduling on the basis of the indication information.

This can, for example, further reduce the amount of information transmitted from the remote node to the centralized node. Hence, the above-described first technical problem can be solved.

(b) Second Technical Feature

In the example embodiments, for example, the remote node selects whether or not to notify the centralized node of the channel information for a terminal apparatus (or indication information indicating candidate channel information corresponding to the channel information), on the basis of the channel quality indicator (CQI) for the terminal apparatus. More specifically, for example, the remote node selects to notify the centralized node of the channel information (or the indication information) when the CQI is larger than a threshold.

With this feature, for example, opportunities to notify the centralized node of channel information (or indication information) are limited. This can, for example, further reduce the amount of information transmitted from the remote node to the centralized node. Hence, the above-described first technical problem can be solved.

(c) Third Technical Feature

In the example embodiments, for example, the remote node selects a set of terminal apparatuses 300 (a pair of terminal apparatuses 300 as an example) suitable for spatial multiplexing or beamforming from among multiple terminal apparatuses, on the basis of channel information for the multiple terminal apparatuses. The remote node then notifies the centralized node of terminal set information (paring information as an example) indicating the set of terminal apparatuses 300. The centralized node then performs scheduling on the basis of the terminal set information.

This, for example, allows the processing (processing for selecting a set of terminal apparatuses (e.g., paring of terminal apparatuses)) to be distributed to the remote nodes, which reduces the processing of scheduling performed by the centralized node. Hence, the above-described second technical problem can be solved.

(d) Fourth Technical Feature

In the example embodiment, for example, the centralized node notifies the remote node of scheduling information to be used by the remote node in order to transmit downlink signals. In particular, the scheduling information includes resource allocation information, and the resource allocation information indicates, instead of indicating individual radio resources allocated to terminal apparatuses, a pattern of the radio resources.

This can, for example, reduce the amount of information to be transmitted from the centralized node to the remote node. Hence, the above-described first technical problem can be solved.

Note that the above-described technical features are concrete examples, and technical features of the example embodiments are, of course, not limited to the above-described technical features.

<<3. Example of Configuration of System>>

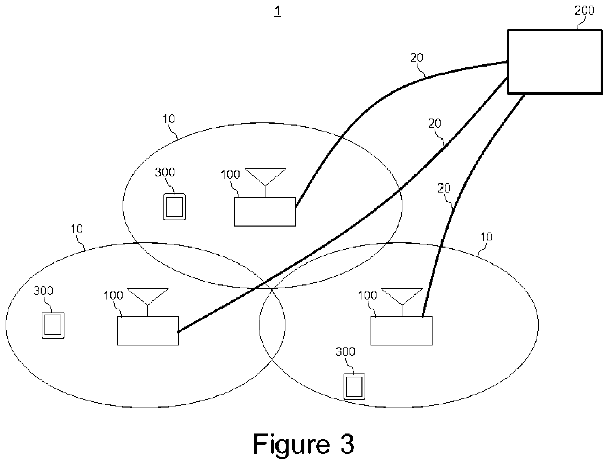

An example of a configuration of a system 1 according to an example embodiment is described with reference to FIG. 3. FIG. 3 is an explanatory diagram illustrating an example of a schematic configuration of the system 1 according to the example embodiment. According to FIG. 3, the system 1 includes remote nodes 100, a centralized node 200, and terminal apparatuses 300. The remote nodes 100 and the centralized node 200 are nodes in a radio access network (RAN), and the centralized node 200 is a first node in the radio access network (RAN) (a first radio access network node) while the remote nodes 100 are each a second node in the radio access network (RAN) (second radio access network node), for example. Each of the remote nodes 100 and the centralized node 200 communicate with each other via a transmission line 20 (e.g., an optical fiber line). The radio access network may operate according to time division duplex (TDD) or may operate according to frequency division duplex (FDD).

(1) Remote Nodes 100

Each of the remote nodes 100 covers a communication area 10 of the remote node 100 itself and performs radio communication with each terminal apparatus 300 located in the communication area 10 of the remote node 100 itself. The communication area 10 is also referred to as a cell or a coverage area. The remote node 100 performs, for the radio communication with the terminal apparatus 300, processing in a lower layer in the protocol layers of the radio access network (RAN). As an example, the terminal apparatus 300 performs processing in Layer 1 (e.g., the physical layer).

For example, the remote node 100 is located away from the centralized node 200. However, the example embodiment is not limited to this example, and the remote node 100 may be located near the centralized node 200.

The remote node 100 may be referred to as a remote radio unit (RRU), a remote radio head (RRH), or a radio unit (RU), or may be referred to as another term.

(2) Centralized Node 200

The centralized node 200 performs radio communication with each terminal apparatus 300 located in the communication area 10 of each of the remote nodes 100, via the remote node 100. The centralized node 200 performs, for the radio communication with the terminal apparatus 300, processing in a higher layer in the protocol layers of the radio access network (RAN). As an example, the centralized node 200 performs processing in Layer 2 (e.g., the MAC, the RLC, and the PDCP), Layer 3 (e.g., the radio resource control (RRC) and the like), and the like.

As illustrated in FIG. 3, for example, the centralized node 200 is connected to the multiple remote nodes 100. In other words, processing (or functions) relating to the multiple communication areas 10 is centralized in the centralized node 200. Alternatively, the centralized node 200 may be connected only to a single one of the remote nodes 100.

The centralized node 200 may be referred to as a baseband unit (BBU) or a digital unit (DU), may be referred to as a coordinated/collaborative node or a cloud node, may be referred to as a centralized base station, coordinated/collaborative base station, or a cloud base station, or may be referred to as another term.

(3) Terminal Apparatuses 300

The terminal apparatuses 300 each performs radio communication with the radio access network. For example, when the terminal apparatus 300 is located within the communication area 10 of one of the remote nodes 100, the terminal apparatus 300 performs radio communication with the remote node 100 and the centralized node 200.

(4) Example of Sharing of Processing by Remote Nodes 100 and Centralized Node 200

The remote nodes 100 and the centralized node 200 are nodes in the radio access network (RAN) and share processing in the radio access network (RAN). As described above, for example, the centralized node 200 performs processing in a higher layer in the protocol layers of the radio access network (RAN), and the remote nodes 100 perform processing in a lower layer in the protocol layers of the radio access network (RAN). As an example, the centralized node 200 performs processing in Layer 2, Layer 3, and the like, and the remote nodes 100 perform processing in Layer 1.

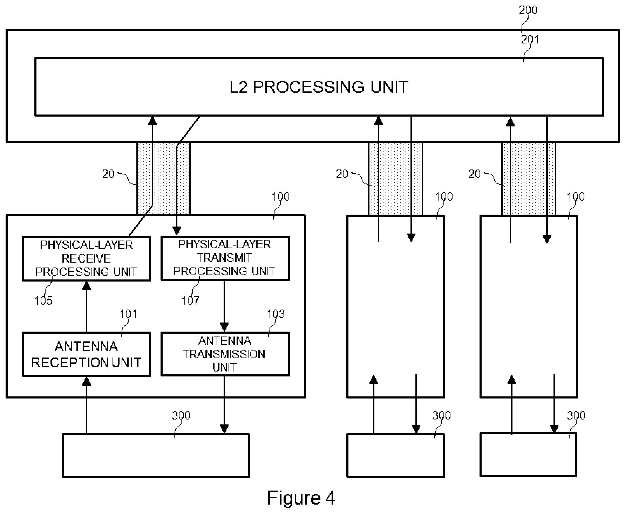

FIG. 4 is an explanatory diagram for describing an example of sharing of processing by the remote nodes 100 and the centralized node 200. With reference to FIG. 4, the remote nodes 100, the centralized node 200, and the terminal apparatuses 300 are illustrated. For example, the remote nodes 100 each include an antenna reception unit 101, an antenna transmission unit 103, a physical-layer receive processing unit 105, and a physical-layer transmit processing unit 107, and the centralized node 200 includes an L2 processing unit 201.

In the remote node 100, the antenna reception unit 101 receives uplink signals transmitted by one of the corresponding terminal apparatuses 300, converts each analog signal into a digital signal, and provides the digital signal to the physical-layer receive processing unit 105. The physical-layer receive processing unit 105 performs physical-layer processing. The remote node 100 then transmits uplink data and control information to the centralized node 200 via the corresponding transmission line 20.

In the centralized node 200, the L2 processing unit 201 performs receive processing and transmit processing in Layer 2 (e.g., the MAC, the RLC, and the PDCP). For example, the L2 processing unit 201 performs downlink and uplink scheduling. The centralized node 200 transmits downlink data and control information to the remote node 100.

In the remote node 100, the physical-layer transmit processing unit 107 performs transmit processing of transmitting downlink signals. The physical-layer transmit processing unit 107 then provides a digital signal obtained as a result of the transmit processing, to the antenna transmission unit 103. The antenna transmission unit 103 converts the digital signal into an analog signal and transmits downlink signals.

Note that the sharing of processing illustrated in FIG. 4 is simply an example, and another form of sharing by the remote nodes 100 and the centralize node 200 may be employed. For example, part of Layer-1 processing may be performed by the centralized node 200, and part of Layer-2 processing may be performed by the remote nodes 100.

The example of the configuration of the system 1 according to the example embodiment has been described above. Note that the radio access network (RAN) including the remote nodes 100 and the centralized node 200 may be referred to as a C-RAN. "C" in the C-RAN may mean "centralized", "coordinated", "collaborative", and/or "cloud".

<<4. First Example Embodiment>>

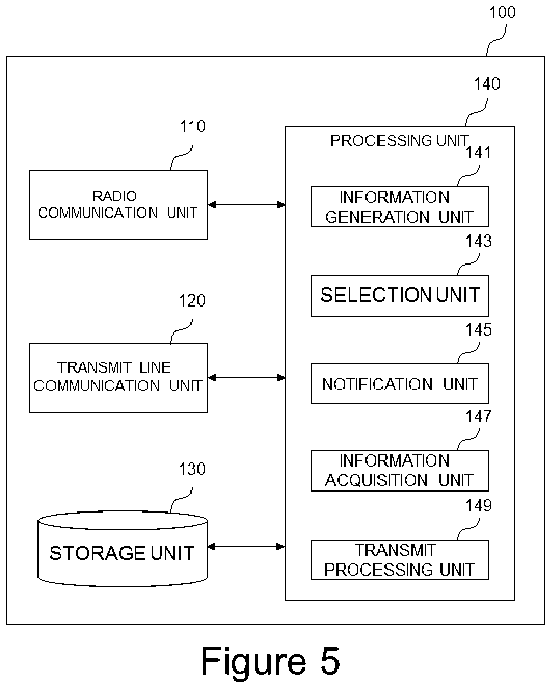

Next, with reference to FIG. 5 to FIG. 12, a first example embodiment of the present invention is described.

<4.1. Example of Configuration of Remote Node>

First, with reference to FIG. 5, an example of a configuration of each remote node 100 according to the first example embodiment is described. FIG. 5 is a block diagram illustrating an example of a schematic configuration of the remote node 100 according to the first example embodiment. According to FIG. 5, the remote node 100 includes a radio communication unit 110, a transmission line communication unit 120, a storage unit 130, and a processing unit 140.

The radio communication unit 110 transmits and receives signals wirelessly. For example, the radio communication unit 110 receives signals from the terminal apparatuses 300 and transmits signals to the terminal apparatuses 300.

The transmission line communication unit 120 transmits signals to the centralized node 200 via the transmission line 20 and receives signals from the centralized node 200 via the transmission line 20.

The storage unit 130 temporarily or permanently stores programs and parameters for operations of the remote node 100 and various data.

The processing unit 140 provides various functions of the remote node 100. The processing unit 140 includes an information generation unit 141, a selection unit 143, a notification unit 145, an information acquisition unit 147, and a transmit processing unit 149. Note that the processing unit 140 may further include constituent components other than these constituent components. In other words, the processing unit 140 may also perform operations other than the operations of these constituent components.

Concrete operations of the information generation unit 141, the selection unit 143, the notification unit 145, the information acquisition unit 147, and the transmit processing unit 149 will be described later in detail.

The radio communication unit 110 may include an antenna, a radio frequency (RF) circuit, and the like. The transmission line communication unit 120 may include an interface apparatus and the like suitable for the transmission line 20. The storage unit 130 may include a memory (e.g., a nonvolatile memory and/or a volatile memory) and/or a hard disk, and the like. The processing unit 140 may include a baseband (BB) processor and/or another processor, and the like.

Note that the antenna reception unit 101 and the antenna transmission unit 103 described with reference to FIG. 4 may correspond to the radio communication unit 110. In addition, the physical-layer receive processing unit 105 and the physical-layer transmit processing unit 107 described with reference to FIG. 4 may correspond to the processing unit 140.

<4.2. Example of Configuration of Centralized Node>

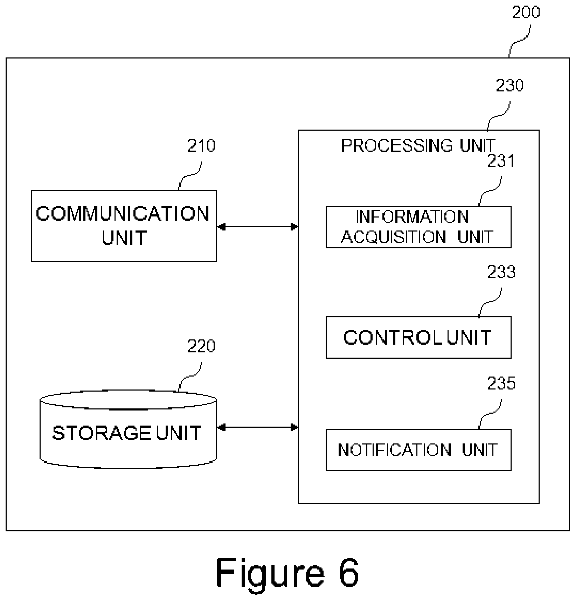

Next, with reference to FIG. 6, an example of a configuration of the centralized node 200 according to the first example embodiment is described. FIG. 6 is a block diagram illustrating an example of a schematic configuration of the centralized node 200 according to the first example embodiment. According to FIG. 6, the centralized node 200 includes a transmission line communication unit 210, a storage unit 220, and a processing unit 230.

The transmission line communication unit 210 receives signals from the remote nodes 100 via the transmission lines 20 and transmits signals to the remote nodes 100 via the transmission lines 20.

The storage unit 220 temporarily or permanently stores programs and parameters for operations of the centralized node 200 and various data.

The processing unit 230 provides various functions of the centralized node 200. The processing unit 230 includes an information acquisition unit 231, a control unit 233, and a notification unit 235. Note that the processing unit 230 may further include constituent components other than these constituent components. In other words, the processing unit 230 may perform operations other than the operations of these constituent components.

Concrete operations of the information acquisition unit 231, the control unit 233, and the notification unit 235 will be described later in detail.

The transmission line communication unit 210 may include an interface apparatus and the like suitable for the transmission lines 20. The storage unit 220 may include a memory (e.g., a nonvolatile memory and/or a volatile memory) and/or a hard disk, and the like. The processing unit 230 may include a baseband (BB) processor and/or another processor, and the like.

Note that the L2 processing unit 201 described with reference to FIG. 4 may correspond to the processing unit 230.

<4.3. Example of Configuration of Terminal Apparatus>

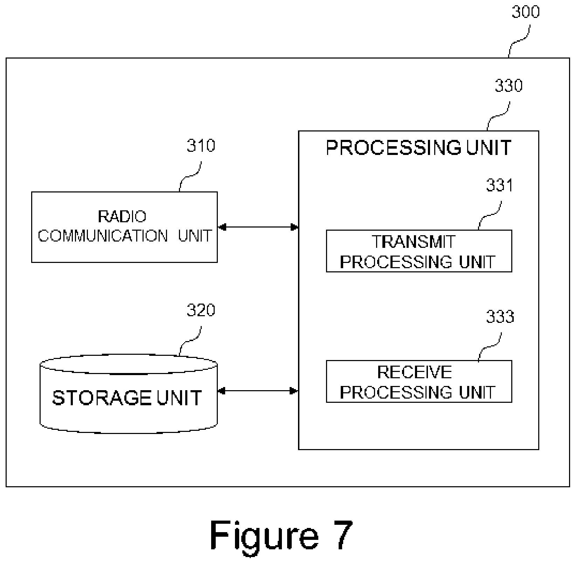

Next, with reference to FIG. 7, an example of a configuration of each terminal apparatus 300 according to the first example embodiment is described. FIG. 7 is a block diagram illustrating an example of a schematic configuration of the terminal apparatus 300 according to the first example embodiment. According to FIG. 7, the terminal apparatus 300 includes a radio communication unit 310, a storage unit 320, and a processing unit 330.

The radio communication unit 310 transmits and receives signals wirelessly. For example, the radio communication unit 310 receives signals from the corresponding remote node 100 and transmits signals to the remote node 100.

The storage unit 320 temporarily or permanently stores programs and parameters for operations of the terminal apparatus 300, and various data.

The processing unit 330 provides various functions of the terminal apparatus 300. The processing unit 330 includes a transmit processing unit 331 and a receive processing unit 333. Note that the processing unit 330 may further include constituent components other than these constituent components. In other words, the processing unit 330 may perform operations other than the operations of these constituent components.

Concrete operations of the transmit processing unit 331 and the receive processing unit 333 will be described later in detail.

The radio communication unit 310 may include an antenna, a radio frequency (RF) circuit, and the like. The storage unit 320 may include a memory (e.g., a nonvolatile memory and/or a volatile memory) and/or a hard disk, and the like. The processing unit 330 may include a baseband (BB) processor and/or another processor, and the like.

<4.4. Technical Features>

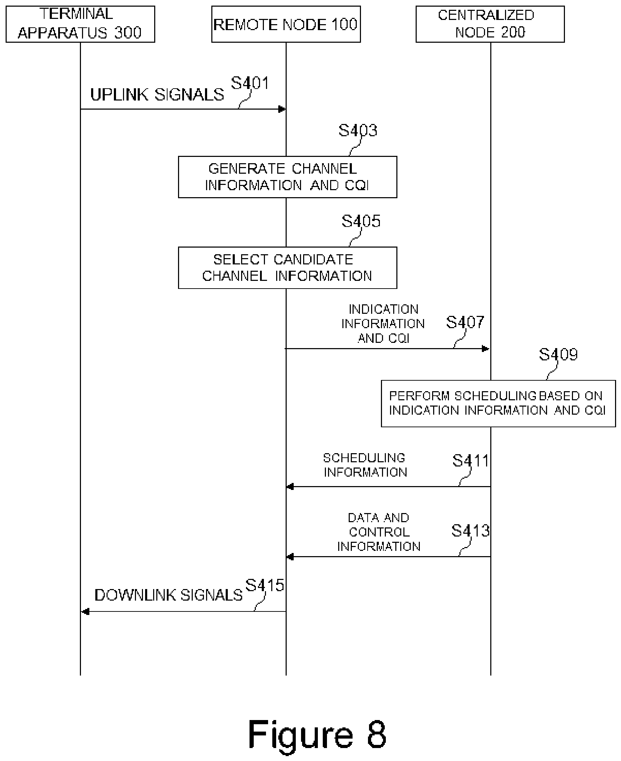

Next, with reference to FIG. 8 to FIG. 12, technical features of the first example embodiment are described. Specifically, first to fourth technical features of the first example embodiment are described. In the first example embodiment, one of the first to fourth technical features may be employed, or a combination of two or more of the first to fourth technical features may be employed.

(1) First Technical Feature

First, with reference to FIG. 8, the first technical feature of the first example embodiment is described.
The terminal apparatus 300 (transmit processing unit 331) transmits uplink signals.
The corresponding remote node 100 (information generation unit 141) generates channel information for the terminal apparatus 300 by performing channel estimation on the basis of the uplink signals. The remote node 100 (selection unit 143) then selects candidate channel information corresponding to the generated channel information from among a group of predetermined candidate channel information. The remote node 100 (notification unit 145) thereafter notifies the centralized node 200 of indication information indicating the selected candidate channel information.
The centralized node 200 (information acquisition unit 231) acquires the indication information. The centralized node 200 (control unit 233) then performs scheduling for the terminal apparatus 300 on the basis of the indication information.

(a) Transmission of Uplink Signals

For example, the uplink signals are uplink reference signals transmitted by the terminal apparatus 300. For example, the uplink reference signals are demodulation reference signals (DMRSs). Alternatively, the uplink reference signals may be sounding reference signals (SRSs).

(b) Generation of Channel Information

As described above, the remote node 100 (information generation unit 141) generates the channel information for the terminal apparatus 300 by performing channel estimation on the basis of the uplink signals.
For example, the channel information is a set of channel estimation values obtained as a result of channel estimation.

- Channel Vector

As an example, the number of antennas (or the number of antenna ports) of the terminal apparatus 300 is one, and the number of antennas (or the number of antenna ports) of the remote node 100 is N. In this case, the channel information is a channel vector including N channel estimation values. Channel vector h is represented as follows, for example.

[Math. 1]

$$h = \begin{bmatrix} h_1 \\ h_2 \\ \mathrm{M} \\ h_N \end{bmatrix}$$

Component $h_i$ ($1 \leq i \leq N$) included in channel vector h is a channel estimation value for antenna i of the remote node 100.

- Channel Matrix

As another example, the number of antennas (or the number of antenna ports) of the terminal apparatus 300 may be M ($M \geq 2$), and the number of antennas (or the number of antenna ports) of the remote node 100 may be N. In this case, the channel information may be a channel matrix represented by an N × M matrix including N × M channel estimation values. Channel matrix H is represented as follows, for example.

[Math. 2]

$$H = \begin{bmatrix} h_{11} & \Lambda & h_{1M} \\ h_{21} & \Lambda & h_{2M} \\ M & O & M \\ h_{N1} & K & h_{1N} \end{bmatrix} = \begin{bmatrix} h_1 & h_2 & \Lambda & h_M \end{bmatrix}$$

Component $h_{ij}$ (1 ≤ i ≤ N, 1 ≤ j ≤ M) included in channel matrix H represents a channel estimation value for antenna i of the remote node 100 and antenna j of the terminal apparatus 300. In addition, column $h_j$ (1 ≤ j ≤ M) included in channel vector h represents a channel vector for antenna j of the terminal apparatus 300.

(c) Selection of Candidate Channel Information

As described above, the remote node 100 (selection unit 143) selects candidate channel information corresponding to the generated channel information from among the group of predetermined candidate channel information.

(c-1) Group of Predetermined Candidate Channel Information

For example, the group of predetermined candidate channel information is a codebook including predetermined candidate channel information as elements.
For example, the codebook includes, as part of the codebook, another codebook used by the terminal apparatus 300 for feedback on a precoding matrix. In other words, the codebook includes a larger number of elements (i.e., a larger number of candidates) than that of the other codebook. This is because the band between the remote node 100 and the centralized node 200 (i.e., the band of the transmission line 20) is wider than the band between the terminal apparatus 300 and the radio access network (RAN) (i.e., the radio band), which makes it possible to transmit more information. This enables more accurate notification of information, for example.
Alternatively, the codebook may be the same as the codebook used by the terminal apparatus 300 for feedback on a precoding matrix.
Reusing the codebook as described above can reduce the number of codebooks to be defined.
The first technical feature is, of course, not limited to this example. Specifically, the group need not include another codebook used by the terminal apparatus 300 for feedback on a precoding matrix.
Note that the group of predetermined candidate channel information may be described as discrete representative values of channel information (e.g., a vector of discrete channel estimation values or a matrix of discrete channel estimation values).

(c-2) Candidate Channel Information

- Information Type

-- Same Type of Information

For example, the candidate channel information included in the group is of the same type as that of the channel information.
As an example, the channel information is a channel vector including N channel estimation values, and the candidate channel information included in the group is a vector including N components.
As another example, the channel information may be an N × M channel matrix including N × M channel estimation values, and the candidate channel information included in the group may be an N × M matrix.

-- Different Types of Information

The candidate channel information included in the group may be of a different type from that of the channel information. As an example, the channel information may be an N × M channel matrix. In this case, the candidate channel information included in the group may be a vector including N components.

- Orthogonality

For example, any two elements included in the group (e.g., the codebook) are orthogonal to each other.
As described above, as an example, the channel information is a channel vector including N channel estimation values, and the candidate channel information included in the group is a vector including N components. In this case, for example, the group includes, as candidates (i.e., N candidates), N vectors (N columns or N rows) included in an N-point DFT matrix (N × N square matrix). Note that the component at the m-th column, the n-th row of the N-point DFT matrix is represented as follows.

[Math. 3]

$$DFT(m,n) = \exp\left(-j2\pi\frac{mn}{N}\right)$$

Note that another matrix may, of course, be used instead of the N-point DFT matrix. As an example, a Walsh-Hadamard matrix may be used.

(c-3) Selection Technique

- First Example

For example, the selected candidate channel information is candidate channel information having a high correlation (e.g., the highest correlation) with the generated channel information. Specifically, the remote node 100 (selection unit 133) selects candidate channel information having a high correlation (e.g., the highest correlation) with the generated channel information, from among the group (e.g., the codebook).
As described above, as an example, the channel information is a channel vector including N channel estimation values, and each candidate channel information included in the group is a vector including N components. In this case, the remote node 100 (selection unit 133) calculates the inner product of each of the candidates included in the group and the channel information and selects the candidate with the largest calculated value (the largest inner product). For example, when the inner product of the generated channel information (channel vector) and the candidate channel information is large (e.g., the largest) as described above, this means that the candidate channel information has a high correlation (e.g., the highest correlation) with the generated channel information, and hence the remote node 100 (selection unit 133) selects the candidate channel information.
As described above, as another example, the channel information may be an N × M channel matrix including N × M channel estimation values, and the candidate channel information included in the group may be an N × M matrix. In this case, the remote node 100 (selection unit 133) may multiply each of the candidates included in the group and the channel information together, calculate the sum of the diagonal components of M × M matrix, which is a result of the multiplication, and select the candidate with the largest calculated value (the largest sum). For example, when the sum of the diagonal components of the result of the multiplication of the generated channel information (channel matrix) and the candidate channel information is large (e.g., the largest) as described above, this means that the candidate channel information has a high correlation (e.g., the highest correlation) with the generated channel information, and hence the remote node 100 (selection unit 133) selects the candidate channel information.
This technique, for example, enables the centralized node 200 to be notified of candidate channel information similar to channel information.

- Second Example

As described above, the channel information may be an N × M channel matrix, and each candidate channel information included in the group may be a vector including N components. In this case, the remote node 100 (selection unit 133) may perform singular value decomposition (SVD) on the channel matrix and acquire the largest singular value and a singular vector (a left singular vector and/or a right singular vector) corresponding to the largest singular value. The remote node 100 (selection unit 133) may then calculate the inner product of each of the candidates included in the group and the singular vector and select the candidate with the largest calculated value (largest inner product).

Note that the remote node 100 (notification unit 135) may notify the centralized node 200 of not only the indication information indicating the selected candidate but also the singular value (or different indication information indicating the singular value).

(d) Notification of Indication Information

As described above, the remote node 100 (notification unit 145) notifies the centralized node 200 of indication information indicating the selected candidate channel information. Specifically, the remote node 100 (notification unit 145) transmits the indication information to the centralized node 200.

As an example, the indication information is an index of the selected candidate channel information. More specifically, for example, the group of predetermined candidate channel information (e.g., the codebook) includes N candidates with indices 0 to N-1. The remote node 100 (notification unit 145) then notifies the centralized node 200 of the index (a corresponding one of 0 to N-1) of the selected candidate channel information.

For example, as described above, the remote node 100 notifies the centralized node 200 of index information (e.g., an index) having a smaller information amount, instead of the generated channel information itself. This, for example, further reduces the amount of information transmitted from the remote node 100 to the centralized node 200.

(e) Notification of Other Information

For example, the remote node 100 (information generation unit 141) generates a channel quality indicator (CQI) for the terminal apparatus 300 by measuring channel quality on the basis of uplink signals transmitted by the terminal apparatus 300. The remote node 100 (notification unit 145) then notifies the centralized node 200 of the channel quality indicator (CQI). Specifically, the remote node 100 (notification unit 145) transmits the channel quality indicator (CQI) to the centralized node 200. For example, the uplink signals are uplink reference signals transmitted by the terminal apparatus 300, and the uplink reference signals are, for example, DMRSs or SRSs.

For example, as described above, the remote node 100 notifies the centralized node 200 of the CQI having a smaller information amount, instead of the measured value itself of uplink channel quality. This, for example, further reduces the amount of information transmitted from the remote node 100 to the centralized node 200.

(f) Execution of Scheduling

As described above, the centralized node 200 (control unit 233) performs scheduling for the terminal apparatus 300 on the basis of the indication information.

- Scheduling

For example, the centralized node 200 (control unit 233) determines allocation of radio resources, adaptive modulation coding (AMC), and weights for spatial multiplexing or beamforming as the scheduling.

As an example, the centralized node 200 acquires the candidate channel information indicated by the indication information and determines weights for spatial multiplexing (e.g., multi-user multiple-input multiple-output (MU-MIMO)) or beamforming for the terminal apparatus 300 on the basis of the candidate channel information.

-CQI

For example, the centralized node 200 (control unit 233) acquires the channel quality indicator (CQI) for the terminal apparatus 300 from the remote node 100. The centralized node 200 (control unit 233) then performs the scheduling for the terminal apparatus 300 further on the basis of the channel quality indicator (CQI).

As an example, the centralized node 200 makes a determination about adaptive modulation coding (AMC) on the basis of the CQI. Specifically, the centralized node 200 determines a modulation order and a coding rate for the terminal apparatus 300.

- Notification of Scheduling Information

For example, the centralized node 200 (notification unit 235) notifies the remote node 100 of scheduling information generated as a result of the scheduling. For example, the scheduling information is not information itself to be transmitted to the terminal apparatus 300 (e.g., downlink control (DCI)) but is information to be used by the remote node 100 in order to transmit downlink signals (e.g., information to be used in Layer 1 (physical layer)). The scheduling information may alternatively be information to be used by the remote node 100 in order to receive uplink signals (e.g.,

information to be used in Layer 1 (physical layer)).

For example, the scheduling information includes resource allocation information, adaptive modulation coding information, and spatial multiplexing information or beamforming information. For example, the resource allocation information is information indicating allocated radio resources. For example, the adaptive modulation coding information is information indicating a modulation order and a coding rate. For example, the spatial multiplexing information is information indicating weights for precoding for spatial multiplexing, and the beamforming information is information indicating weights for beamforming.

- Transmission of Downlink Signals based on Scheduling Result

For example, the remote node 100 (information acquisition unit 147) acquires the scheduling information from the centralized node 200. The remote node 100 (transmit processing unit 149) then transmits downlink signals on the basis of the scheduling information.

For example, the terminal apparatus 300 (receive processing unit 333) receives the downlink signals.

(g) Flow of Processing

FIG. 8 is a sequence diagram illustrating an example of a schematic flow of the processing according to the first technical feature of the first example embodiment.

The terminal apparatus 300 (transmit processing unit 331) transmits uplink signals (S401). For example, the uplink signals are uplink reference signals.

The remote node 100 (information generation unit 141) generates channel information for the terminal apparatus 300 by performing channel estimation on the basis of the uplink signals (S403). In addition, the remote node 100 (information generation unit 141) generates a channel quality indicator (CQI) for the terminal apparatus 300 by measuring the channel quality on the basis of the uplink signals (S403).

The remote node 100 (selection unit 143) selects candidate channel information corresponding to the generated channel information from among a group (e.g., a codebook) of predetermined candidate channel information (S405).

The remote node 100 (notification unit 145) thereafter notifies the centralized node 200 of indication information indicating the selected candidate channel information (S407). In addition, the remote node 100 (notification unit 145) also notifies the centralized node 200 of the CQI (S407).

The centralized node 200 (information acquisition unit 231) acquires the indication information and the CQI. The centralized node 200 (control unit 233) then performs scheduling for the terminal apparatus 300 on the basis of the indication information and the CQI (S409).

The centralized node 200 (notification unit 235) notifies the remote node 100 of scheduling information generated as a result of the scheduling (S411). In addition, the centralized node 200 (notification unit 235) transmits data and control information to be transmitted as downlink signals, to the remote node 100 (S413).

The remote node 100 (information acquisition unit 147) acquires the scheduling information from the centralized node 200. The remote node 100 (transmit processing unit 149) then transmits downlink signals on the basis of the scheduling information (S415).

The terminal apparatus 300 (receive processing unit 333) receives the downlink signals.

The first technical feature of the first example embodiment has been described above. As described above, in particular, the remote node 100 notifies the centralized node 200 of the indication information instead of the channel information itself. This, for example, further reduces the amount of information transmitted from the remote node 100 to the centralized node 200.

(2) Second Technical Feature

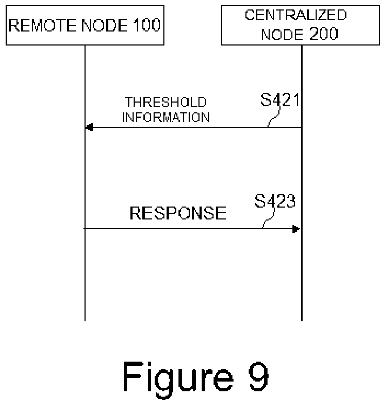

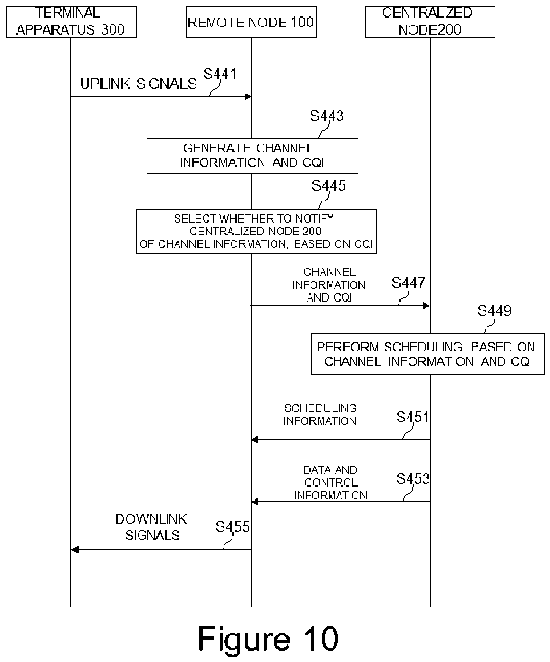

Next, a second technical feature of the first example embodiment is described with reference to FIG. 9 and FIG. 10.

The terminal apparatus 300 (transmit processing unit 331) transmits uplink signals.

The remote node 100 (information generation unit 141) generates channel information for the terminal apparatus 300 by performing channel estimation on the basis of the uplink signals transmitted by the terminal apparatus 300. In addition, the remote node 100 (information generation unit 141) generates a channel quality indicator (CQI) for the terminal apparatus 300 by measuring channel quality on the basis of the uplink signals transmitted by the terminal apparatus 300.

Specifically, the remote node 100 (selection unit 143) selects whether or not to notify the centralized node 200 of the channel information, on the basis of the CQI. In other words, the remote node 100 (selection unit 143) determines whether or not to notify the centralized node 200 of the channel information, on the basis of the CQI. Stated differently, on the basis of the channel quality indicators (CQIs) for the multiple terminal apparatuses 300, the remote node 100 (selection unit 143) selects the terminal apparatus 300 for which the centralized node 200 is notified of channel information, from among the multiple terminal apparatuses 300.

This, for example, limits opportunities to notify the centralized node 200 of channel information. Hence, for example, the amount of information transmitted from the remote node 100 to the centralized node 200 is further reduced.

(a) Transmission of Uplink Signals / Generation of Channel Information

"Transmission of uplink signals" and "generation of channel information" are as described above in association with the first technical feature. Hence, overlapping descriptions are omitted here.

(b) Selection (Determination) Technique

For example, when the CQI is larger than a threshold, the remote node 100 (selection unit 143) selects to notify the centralized node 200 of the channel information. For example, when the CQI is smaller than the threshold, the remote node 100 (selection unit 143) selects not to notify the centralized node 200 of the channel information. When the CQI is equal to the threshold, the remote node 100 (selection unit 143) may select to notify the centralized node 200 of the channel information or may select not to notify the centralized node 200 of the channel information.

With this technique, for example, the centralized node 200 is notified of the channel information for each of the terminal apparatuses 300 with a relatively satisfactory channel (i.e., the terminal apparatus 300 suitable for spatial multiplexing or beamforming) while being not notified of the channel information for each of the terminal apparatuses 300 with a relatively unsatisfactory channel. This means that notification of information with high usability is ensured while notification of information with low usability is limited. Hence, efficient notification of channel information can be enabled.

Note that the remote node 100 (selection unit 143) may notify the centralized node 200 of the CQI irrespective of whether or not a notification of the channel information has been made.

(c) Acquisition of Threshold Information

For example, the centralized node 200 (information acquisition unit 231) acquires threshold information indicating the threshold (i.e., the threshold to be compared with the channel quality indicator (CQI) generated by the remote node 100). The centralized node 200 (notification unit 235) then notifies the remote node 100 of the threshold information. Specifically, the centralized node 200 (notification unit 235) transmits the threshold information (e.g., a message including the threshold information) to the remote node 100.

For example, the remote node 100 (information acquisition unit 147) acquires the threshold information from the centralized node 200.

As a first example, the remote node(s) 100 is already located at the time of starting the operation of the centralized node 200. In this case, when the operation of the centralized node 200 starts, the centralized node 200 (notification unit 235) notifies the remote node(s) 100 of the threshold information, and the remote node 100 (information acquisition unit 147) acquires the threshold information from the centralized node 200. As a result of this, for example, the above-described operation is possible to be performed immediately after the operation start.

As a second example, the remote node(s) 100 is not configured at the time of starting the operation of the centralized node 200, and are added later to the centralized node 200. In this case, the centralized node 200 (notification unit 235) notifies the remote node(s) 100 of the threshold information, and the remote node 100 (information acquisition unit 147) acquires the threshold information from the centralized node 200, at the time of addition of the remote node(s) 100 to the centralized node 200. As a result of this, for example, the above-described operation is possible to be performed immediately after the addition of the remote node(s) 100.

As described above, the centralized node 200 notifies each of the remote nodes 100 of the threshold information, and thereby the remote node 100 acquires the threshold information from the centralized node 200. This, for example, prevents the necessity for an operator to set a threshold for each of the remote nodes 100, which can reduce the load of the operation.

Note that the threshold (or the threshold information) may be determined for each of the remote nodes 100 or may be common to the multiple remote nodes 100.

(d) Flow of Processing

- First Processing (Notification and Acquisition of Threshold Information)

FIG. 9 is a sequence diagram illustrating an example of a schematic flow of first processing according to the second technical feature of the first example embodiment. The first processing is processing for notification and acquisition of threshold information.

The centralized node 200 (information acquisition unit 231) acquires threshold information indicating the threshold to be compared with each channel quality indicator (CQI) generated by the remote node 100. The centralized node 200 (notification unit 235) then notifies the remote node 100 of the threshold information (S421). For example, the centralized node 200 (notification unit 235) transmits a message including the threshold information, to the remote node 100.

The remote node 100 (information acquisition unit 147) acquires the threshold information from the centralized node 200. The remote node 100 (notification unit 145) then responds to the centralized node 200 (S423). For example, the remote node 100 (notification unit 145) transmits a response message to the centralized node 200.

- Second Processing (Uplink and Downlink Transmission and Reception)

FIG. 10 is a sequence diagram illustrating an example of a schematic flow of second processing according to the second technical feature of the first example embodiment. The second processing is processing for uplink and downlink transmission and reception.

The terminal apparatus 300 (transmit processing unit 331) transmits uplink signals (S441). For example, the uplink signals are uplink reference signals.

The remote node 100 (information generation unit 141) generates channel information for the terminal apparatus 300 by performing channel estimation on the basis of the uplink signals (S443). In addition, the remote node 100 (information generation unit 141) generates a channel quality indicator (CQI) for the terminal apparatus 300 by measuring the channel quality on the basis of the uplink signals (S443).

The remote node 100 (selection unit 143) selects whether or not to notify the centralized node 200 of the channel information, on the basis of the CQI (S445). For example, the remote node 100 (selection unit 143) selects to notify the centralized node 200 of the channel information when the CQI is larger than the threshold while selecting not to notify the centralized node 200 of the channel information when the CQI is smaller than the threshold. In this example, the CQI is larger than the threshold, and hence the remote node 100 (selection unit 143) selects to notify the centralized node 200 of the channel information.

The remote node 100 (notification unit 145) notifies the centralized node 200 of the channel information and the CQI (S447).

The centralized node 200 (information acquisition unit 231) acquires the channel information and the CQI. The centralized node 200 (control unit 233) then performs scheduling for the terminal apparatus 300 on the basis of the channel information and the CQI (S449).

The centralized node 200 (notification unit 235) notifies the remote node 100 of scheduling information generated as a result of the scheduling (S451). In addition, the centralized node 200 (notification unit 235) transmits data and control information to be transmitted as downlink signals, to the remote node 100 (S453).

The remote node 100 (information acquisition unit 147) acquires the scheduling information from the centralized node 200. The remote node 100 (transmit processing unit 149) then transmits downlink signals on the basis of the scheduling information (S455).

The terminal apparatus 300 (receive processing unit 333) receives the downlink signals.

(e) Combination with Another Technical Feature

In addition to the second technical feature, the first technical feature may be employed.

For example, the remote node 100 (notification unit 145) may notify the centralized node 200 of indication information indicating candidate channel information corresponding to the channel information, instead of the channel information itself. In this case, the remote node 100 (selection unit 143) may select whether or not to notify the centralized node 200 of the indication information, on the basis of the CQI. For example, the remote node 100 (selection unit 143) may select to notify the centralized node 200 of the indication information when the CQI is larger than the threshold, while selecting not to notify the centralized node 200 of the indication information when the CQI is smaller than the threshold.

This, for example, further reduces the amount of information transmitted from the remote node 100 to the centralized node 200.

The second technical feature of the first example embodiment has been described above. As described above, in particular, the remote node 100 selects (or determines) whether or not to notify the centralized node 200 of the channel information (or the indication information), on the basis of the CQI. This, for example, further reduces the amount of information transmitted from the remote node 100 to the centralized node 200.

(3) Third Technical Feature

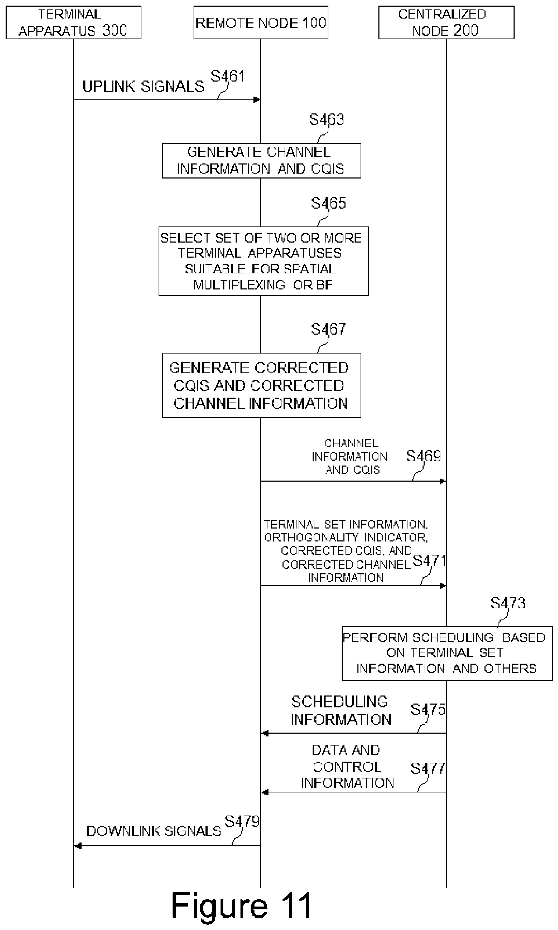

Next, with reference to FIG. 11, a third technical feature of the first example embodiment is described.

The terminal apparatus 300 (transmit processing unit 331) transmits uplink signals.

The remote node 100 (information generation unit 141) generates channel information for multiple respective terminal apparatuses 300 by performing channel estimation on the basis of uplink signals transmitted by the multiple respective terminal apparatuses 300. Moreover, the remote node 100 (selection unit 143) selects a set of two or more terminal apparatuses 300 suitable for spatial multiplexing or beamforming from among the multiple terminal apparatuses 300 on the basis of the channel information for the multiple respective terminal apparatuses 300. The remote node 100 (notification unit 145) then notifies the centralized node 200 of terminal set information indicating the set of the two or more terminal apparatuses 300.

The centralized node 200 (information acquisition unit 231) acquires the terminal set information from the remote node 100. The centralized node 200 (control unit 233) then performs scheduling for the two or more terminal apparatuses on the basis of the terminal set information.

With this feature, for example, the processing (processing for selecting a set of terminal apparatuses (e.g., paring of terminal apparatuses)) is shared with the remote node 100, which reduces the processing of scheduling in the centralized node 200.

Note that, when a pair of terminal apparatuses 300 (i.e., two terminal apparatuses 300) is selected as a set of terminal apparatuses 300, the selection of the set of terminal apparatuses 300 may be referred to as paring of terminal apparatuses 300, and the terminal set information may be referred to as paring information.

(a) Transmission of Uplink Signals / Generation of Channel Information

"Transmission of uplink signals" and "generation of channel information" are as described above in association with the first technical feature. Hence, overlapping descriptions are omitted here.

(b) Technique for Selecting Terminal Set

For example, the set of the two or more terminal apparatuses 300 is a set of two or more terminal apparatuses with channel information having high orthogonality. In other words, the remote node 100 (selection unit 133) selects a set of two or more terminal apparatuses with channel information having high orthogonality, from among the multiple terminal apparatuses.

More specifically, for example, the remote node 100 (selection unit 143) calculates, for a candidate set of terminal apparatuses 300 included in the multiple terminal apparatuses 300, an orthogonality indicator indicating the degree of orthogonality between the channel information of the terminal apparatuses 300 included in the candidate set. When the orthogonality indicator is smaller than a threshold (or the orthogonality indicator is larger than the threshold), the remote node 100 (selection unit 143) selects the candidate set as the set. Otherwise, the remote node 100 (selection unit 143) does not select the candidate set as the set. Such processing is performed for each candidate set, for example.

As an example, the remote node 100 (selection unit 143) calculates an orthogonality indicator as follows. First, the remote node 100 (selection unit 143) generates a single matrix by combining channel information (vectors or matrices) for the two or more terminal apparatuses. For example, the remote node 100 (selection unit 143) generates an $N \times 2$ matrix by combining channel vectors (vectors including N components) for the two terminal apparatuses. The remote node 100 (selection unit 143) further performs singular value decomposition (SVD) on the single matrix to acquire the one or more singular values of the matrix. The remote node 100 (selection unit 143) then calculates the ratio between the largest value and the smallest value of the singular values as an orthogonality indicator. In general, the smaller the ratio between the largest value and the smallest value of the singular values is, the higher the orthogonality becomes. For this reason, when the orthogonality indicator (i.e., the ratio between the largest value and the smallest value of the singular values) is smaller than the threshold, the remote node 100 (selection unit 143) selects the candidate set as the set. Otherwise, the remote node 100 (selection unit 143) does not select the candidate set as the set. This can, for example, further reduce the amount of information (terminal set information) of which the remote node 100 notifies the centralized node 200.

Note that the centralized node 200 may notify the remote node 100 of threshold information indicating the threshold (i.e., threshold for determining the orthogonality between channel information), and thereby the remote node 100 may acquire the threshold information. A description of such notification and acquisition of threshold information is the same as the description of the notification and acquisition of threshold information associated with the second technical feature (i.e., the threshold to be compared with each CQI generated by the remote node 100). Hence, an overlapping description is omitted here.

(c) Orthogonality Indicator

For example, the remote node 100 (selection unit 143) generates an orthogonality indicator indicating the degree of orthogonality between channel information of the two or more terminal apparatuses 300. The remote node 100 (notification unit 145) then notifies the centralized node 200 of the orthogonality indicator.

For example, the centralized node 200 (information acquisition unit 231) acquires the orthogonality indicator from the remote node 100. The centralized node 200 (control unit 233) then performs scheduling for the two or more terminal apparatuses 300 further on the basis of the orthogonality indicator.

This, for example, allows the centralized node 200 not to calculate the orthogonality indicator by itself, which can reduce the processing of scheduling in the centralized node 200.

Note that the orthogonality indicator may be the ratio between the largest value and the smallest value of singular values (i.e., the calculated value itself) as described above or may be a candidate orthogonality indicator closest to the ratio (i.e., the calculated value itself) among predetermined candidate orthogonality indicators.

(d) Correction Information

- Corrected CQIs

For example, the remote node 100 (information generation unit 141) generates channel quality indicators (CQIs) for the multiple respective terminal apparatuses 300 by measuring channel quality on the basis of uplink signals transmitted by the multiple respective terminal apparatuses 300. Moreover, the remote node 100 (information generation unit 141 or selection unit 143) generates corrected channel quality indicators (CQIs) for the set of the two or more terminal apparatuses 300. Correction here, for example, is correction for spatial multiplexing or beamforming for the two or more terminal apparatuses 300 (i.e., correction to a value presumed when spatial multiplexing or beamforming is performed for the two or more terminal apparatuses 300). The remote node 100 (notification unit 145) then notifies the centralized node 200 of the corrected CQIs.

For example, the centralized node 200 (information acquisition unit 231) acquires the corrected CQIs from the remote node 100. The centralized node 200 (control unit 233) then performs scheduling for the two or more terminal apparatuses 300 further on the basis of the corrected CQIs.

This, for example, allows the centralized node 200 not to correct the CQI by itself, which can reduce the processing of scheduling in the centralized node 200.

- Corrected Channel Information

For example, the remote node 100 (information generation unit 141 or selection unit 143) generates corrected channel information for the set of the two or more terminal apparatuses 300. Correction here, for example, is correction for spatial multiplexing or beamforming for the two or more terminal apparatuses 300. The remote node 100 (notification unit 145) then notifies the centralized node 200 of the corrected channel information.

For example, the centralized node 200 (information acquisition unit 231) acquires the corrected channel information from the remote node 100. The centralized node 200 (control unit 233) performs scheduling for the two or more terminal apparatuses 300 further on the basis of the corrected channel information.

This, for example, allows the centralized node 200 not to correct channel information by itself, which can reduce the processing of scheduling in the centralized node 200.

(e) Flow of Processing

FIG. 11 is a sequence diagram illustrating an example of a schematic flow of the processing according to the third technical feature of the first example embodiment.

Multiple terminal apparatuses 300 (transmit processing units 331) transmit uplink signals (S461). For example, the uplink signals are uplink reference signals.

The remote node 100 (information generation unit 141) generates channel information for the multiple respective terminal apparatuses 300 by performing channel estimation on the basis of the uplink signals (S463). In addition, the remote node 100 (information generation unit 141) generates channel quality indicators (CQIs) for the multiple respective terminal apparatuses 300 by measuring the channel quality on the basis of the uplink signals (S463).

The remote node 100 (selection unit 143) selects a set of two or more terminal apparatuses 300 suitable for spatial multiplexing or beamforming (BF) from among the multiple terminal apparatuses 300 on the basis of the channel information for the multiple respective terminal apparatuses 300 (S465).

Moreover, the remote node 100 (information generation unit 141 or selection unit 143) generates orthogonality indicator(s) indicating the degree of orthogonality between channel information for the two or more terminal apparatuses 300 as well as corrected CQIs and corrected channel information for the set of two or more terminal apparatuses 300 (S467).

The remote node 100 (selection unit 143) notifies the centralized node 200 of the channel information and the CQIs (S469). In addition, the remote node 100 (selection unit 143) notifies the centralized node 200 of the terminal set information indicating the set of two or more terminal apparatuses 300, the orthogonality indicator, the corrected CQIs, and the corrected channel information (S471).

The centralized node 200 (control unit 233) performs scheduling for the two or more terminal apparatuses 300 on the basis of the terminal set information, the orthogonality indicator, the corrected CQIs, and the corrected channel information (as well as the channel information and the CQIs) (S473).

The centralized node 200 (notification unit 235) notifies the remote node 100 of scheduling information generated as a result of the scheduling (S475). Moreover, the centralized node 200 (notification unit 235) transmits data and control information to be transmitted as downlink signals, to the remote node 100 (S477).

The remote node 100 (information acquisition unit 147) acquires the scheduling information from the centralized node 200. The remote node 100 (transmit processing unit 149) then transmits downlink signals on the basis of the scheduling information (S479).

The terminal apparatuses 300 (receive processing units 333) receive the downlink signals.

(f) Combination with Other Technical Features

In addition to the third technical feature, the first technical feature may be employed.

For example, the remote node 100 (notification unit 145) may notify the centralized node 200 of indication information indicating candidate channel information corresponding to channel information, instead of the channel information itself. The centralized node 200 (information acquisition unit 231) may then acquire the indication information, and the centralized node 200 (control unit 233) may perform the scheduling on the basis of the indication information.

In addition, the remote node 100 (notification unit 145) may notify the centralized node 200 of indication information indicating the candidate channel information corresponding to the corrected channel information, instead of the corrected channel information itself. The centralized node 200 (information acquisition unit 231) may then acquire the indication information, and the centralized node 200 (control unit 233) may perform the scheduling on the basis of the indication information.

Moreover, in addition to the third technical feature, the second technical feature may be employed.

This, for example, reduces the amount of information transmitted from the remote node 100 to the centralized node 200.

The third technical feature of the first example embodiment has been described above. As described above, in particular, the remote node 100 notifies the centralized node 200 of the terminal set information, and the centralized node 200 performs the scheduling on the basis of the terminal set information. This, for example, allows the processing (the processing for selecting a set of terminal apparatuses (e.g., paring of terminal apparatuses)) to be shared with the remote node 100, which reduces the processing of scheduling by the centralized node 200.

(4) Fourth Technical Feature

Next, a fourth technical feature of the first example embodiment is described.

The centralized node 200 (control unit 233) performs scheduling for the terminal apparatus 300. The centralized node 200 (notification unit 235) then notifies the remote node 100 of scheduling information generated as a result of the scheduling.

The scheduling information may be information to be used by the remote node 100 in order to transmit downlink signals (e.g., information to be used in Layer 1 (physical layer)), instead of the information itself to be transmitted to the terminal apparatus 300 (e.g., downlink control (DCI)).

In particular, the scheduling information includes resource allocation information, and the resource allocation information indicates a pattern of radio resources allocated to the terminal apparatus 300. This, for example, reduces the amount of information transmitted from the centralized node 200 to the remote node 100.

(a) Resource Pattern

For example, the resource allocation information indicates the start position and the size of the radio resources allocated to the terminal apparatus 300, as the pattern of the radio resources allocated to the terminal apparatus 300.

More specifically, for example, the radio resources are allocated according to resource allocation type defined in the LTE/LTE-Advanced, and the resource allocation information is information on a format corresponding to the resource allocation type.

(b) Flow of Processing

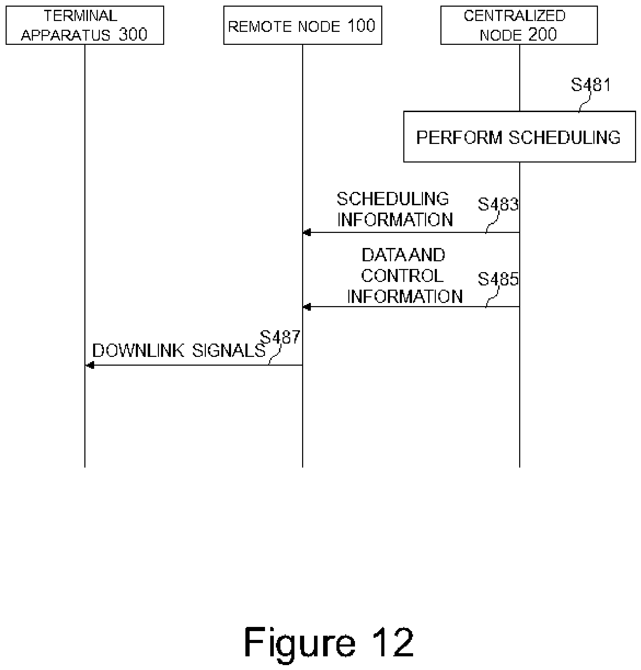

FIG. 12 is a sequence diagram illustrating an example of a schematic flow of the processing according to the fourth technical feature of the first example embodiment.

The centralized node 200 (control unit 233) performs scheduling for the terminal apparatus 300 (S481).

The centralized node 200 (notification unit 235) notifies the remote node 100 of scheduling information generated as a result of the scheduling (S483). In particular, the scheduling information includes resource allocation information, and the resource allocation information indicates a pattern of radio resources allocated to the terminal apparatus 300.

The centralized node 200 (notification unit 235) transmits data and control information to be transmitted as downlink signals, to the remote node 100 (S485).

The remote node 100 (information acquisition unit 147) acquires the scheduling information from the centralized node 200. The remote node 100 (transmit processing unit 149) then transmits downlink signals on the basis of the scheduling information (S487).

The terminal apparatus 300 (receive processing unit 333) receives the downlink signals.

(c) Others

- Codebook

The scheduling information may include the index of elements included in the codebook (i.e., a codebook index).

As a first example, the codebook may be a group of candidate weight sets for spatial multiplexing or beamforming (e.g., a weight vector or a weight matrix (e.g., precoding matrix)). In this case, the remote node 100 (transmit processing unit 149) may select a weight set for spatial multiplexing or beamforming on the basis of the index.

As a second example, the codebook may be a group of predetermined candidate channel information. In this case, the remote node 100 (transmit processing unit 149) may select candidate channel information on the basis of the index and calculate a weight set for spatial multiplexing or beamforming on the basis of the candidate channel information.

Such notification of an index, for example, reduces the amount of information transmitted from the centralized node 200 to the remote node 100.

- Channel Information

The remote node 100 (information generation unit 141) may generate channel information for the terminal apparatus 300 by performing channel estimation on the basis of uplink signals transmitted by the terminal apparatuses 300. The remote node 100 (information generation unit 141) may then calculate a weight set (e.g., a weight vector or a weight matrix (e.g., precoding matrix)) for spatial multiplexing or beamforming in the downlink on the basis of the generated channel information. The remote node 100 (information generation unit 141) may then transmit downlink signals by the use of the weight set.

Note that, even when the scheduling information includes the index of element included in the codebook as described above, the remote node 100 (information generation unit 141) may calculate the weight set on the basis of the generated channel information.

This, for example, enables calculation of more accurate weight set.

- Uplink

The uplink scheduling information may be information to be used by the remote node 100 in order to receive uplink signals (e.g., information to be used in Layer 1 (physical layer)). Specifically, the scheduling information may include downlink scheduling information and uplink scheduling information. In this case, the remote node 100 may receive uplink signals on the basis of the scheduling information.

(d) Combination with Another Technical Feature(s)

In addition to the above-described fourth technical feature, the first technical feature, the second technical feature, and/or the third technical feature that are described above may be employed.

The fourth technical feature of the first example embodiment has been described above. As described above, in particular, the scheduling information of which the centralized node 200 notifies the remote node 100 includes resource allocation information, and the resource allocation information indicates the pattern of the radio resources allocated to the terminal apparatus 300. This, for example, reduces the amount of information transmitted from the centralized node 200 to the remote node 100.

<<5. Second Example Embodiment>>

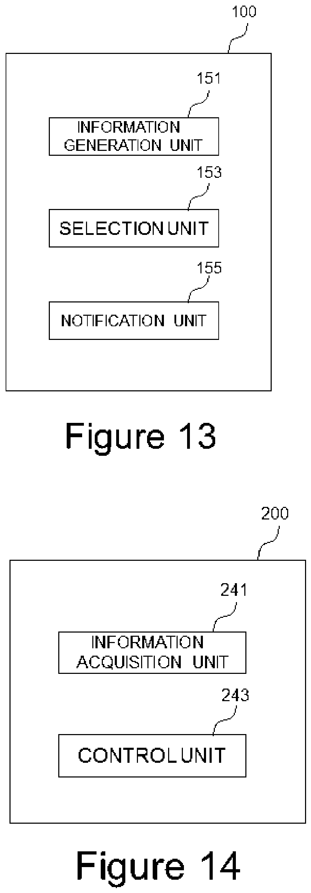

Next, with reference to FIG. 13 to FIG. 16, a second example embodiment of the present invention will be described.

<5.1. Example of Configuration of Remote Node>

First, with reference to FIG. 13, an example of a configuration of each remote node 100 according to the second example embodiment is described. FIG. 13 is a block diagram illustrating an example of a schematic configuration of the remote node 100 according to the second example embodiment. According to FIG. 13, the remote node 100 includes an information generation unit 151, a selection unit 153, and a notification unit 155.

Operations of the information generation unit 151, the selection unit 153, and the notification unit 155 will be described later.

The information generation unit 151, the selection unit 153, and the notification unit 155 may be implemented by a baseband (BB) processor and/or another processor.

<5.2. Example of Configuration of Centralized Node>

Next, with reference to FIG. 14, an example of a configuration of a centralized node 200 according to the second example embodiment is described. FIG. 14 is a block diagram illustrating an example of a schematic configuration of the centralized node 200 according to the second example embodiment. According to FIG. 14, the centralized node 200 includes an information acquisition unit 241 and a control unit 243.

Operations of the information acquisition unit 241 and the control unit 243 will be described later.

The information acquisition unit 241 and the control unit 243 may be implemented by a baseband (BB) processor and/or another processor.

<5.3. Example of Configuration of Terminal Apparatus>

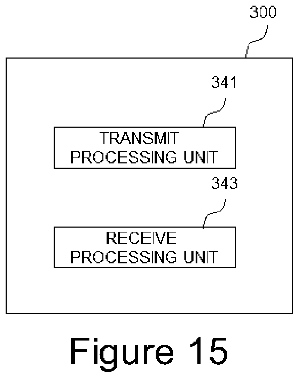

Next, with reference to FIG. 15, an example of a configuration of each terminal apparatus 300 according to the second example embodiment is described. FIG. 15 is a block diagram illustrating an example of a schematic configuration of the terminal apparatus 300 according to the second example embodiment. According to FIG. 15, the terminal apparatus 300 includes a transmit processing unit 341 and a receive processing unit 343.

Operations of the transmit processing unit 341 and the receive processing unit 343 will be described later.

The transmit processing unit 341 and the receive processing unit 343 may be implemented by a baseband (BB) processor and/or another processor.

<5.4. Technical Feature>

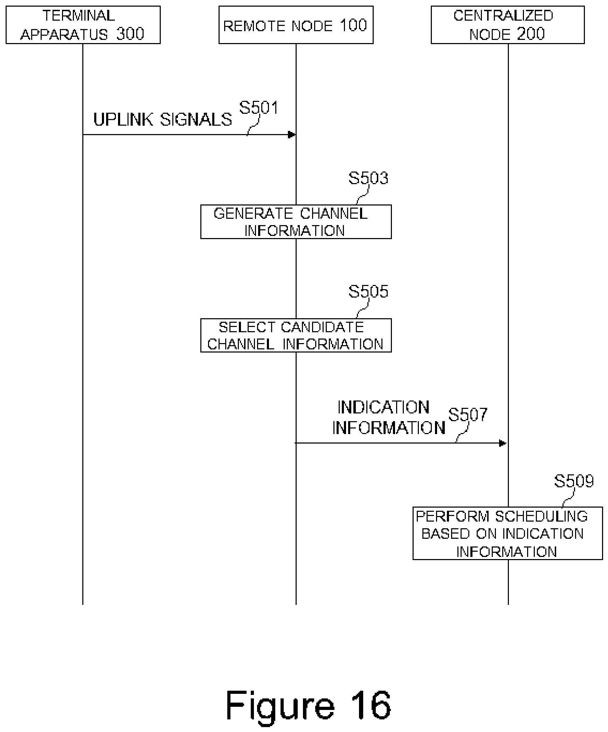

Next, with reference to FIG. 16, a technical feature of the second example embodiment is described.

The terminal apparatus 300 (transmit processing unit 341) transmits uplink signals.

The remote node 100 (information generation unit 151) generates channel information for the terminal apparatus 300 by performing channel estimation on the basis of the uplink signals. The remote node 100 (selection unit 153) then selects candidate channel information corresponding to the generated channel information from among a group of predetermined candidate channel information. The remote node 100 (notification unit 155) thereafter notifies the centralized node 200 of indication information indicating the selected candidate channel information.

The centralized node 200 (information acquisition unit 241) acquires the indication information. The centralized node 200 (control unit 243) performs scheduling for the terminal apparatus 300 on the basis of the indication information.

(a) Transmission of Uplink Signals / Generation of Channel Information / Selection of Candidate Channel Information / Notification of Indication Information / Execution of Scheduling

Descriptions of "transmission of uplink signals", "generation of channel information", "selection of candidate channel information", "notification of indication information", and "execution of scheduling" in the second example embodiment are the same, for example, as those in the first example embodiment (except for the difference in reference sign). Hence, overlapping descriptions are omitted here.

(b) Flow of Processing

FIG. 16 is a sequence diagram illustrating an example of a schematic flow of processing according to the second example embodiment.
The terminal apparatus 300 (transmit processing unit 341) transmits an uplink signal (S501).
The remote node 100 (information generation unit 151) generates channel information for the terminal apparatus 300 by performing channel estimation on the basis of the uplink signals (S503).
The remote node 100 (selection unit 153) selects candidate channel information corresponding to the generated channel information from among a group or predetermined candidate channel information (S505).
The remote node 100 (notification unit 155) then notifies the centralized node 200 of indication information indicating the selected candidate channel information (S507).
The centralized node 200 (information acquisition unit 241) acquires the indication information. The centralized node 200 (control unit 243) then performs scheduling for the terminal apparatus 300 on the basis of the indication information (S509).
The example embodiments have been described above. The present invention is not limited to the above-described example embodiments and is possible to be implemented by making various changes within the scope of the gist of the present invention. The above-described embodiments are examples, and it should be understood by those skilled in the art that various modified examples can be made to combinations of the example embodiments and combinations of constituent components and processing processes of the example embodiments and that such modified examples are also within the scope of the present invention.
For example, the steps in any processing described herein need not be performed chronologically in the order illustrated in the corresponding sequence diagram. For example, the steps of the processing may be performed in a different order from the order illustrated as the corresponding sequence diagram or may be performed in parallel.
Moreover, a module (for a remote node) including constituent elements of the remote node described herein (e.g., the information generation unit, the selection unit, the notification unit, the information acquisition unit, and/or the transmit processing unit) may be provided. In addition, a module (for a centralized node) including constituent elements of the centralized node described herein (e.g., the information acquisition unit, the control unit, and/or the notification unit) may be provided. Moreover, a module (for a terminal apparatus) including the constituent elements of the terminal apparatus described herein (e.g., the transmit processing unit and/or receive processing unit) may be provided. Moreover, methods including processing of such constituent elements may be provided, and programs for causing processors to execute processing of such constituent elements may be provided. Furthermore, recording media recording the programs may be provided. It is apparent that such modules, methods, programs, and recording media are also included in the present invention.
Some of or all the above-described example embodiments can be described as in the following Supplementary Notes, but are not limited to the following.

(Supplementary Note 1)

An apparatus comprising:

an information generation unit configured to generate channel information for a terminal apparatus by performing channel estimation based on uplink signals transmitted by the terminal apparatus;
a selection unit configured to select candidate channel information corresponding to the generated channel information from among a group of predetermined candidate channel information; and
a notification unit configured to notify a first node, which performs scheduling for the terminal apparatus, of indication information indicating the selected candidate channel information.

(Supplementary Note 2)

The apparatus according to Supplementary Note 1, wherein the indication information is an index of the selected candidate channel information.

(Supplementary Note 3)

The apparatus according to Supplementary Note 1 or 2, wherein the group of predetermined candidate channel information is a codebook including predetermined candidate channel information as elements.

(Supplementary Note 4)

The apparatus according to Supplementary Note 3, wherein the codebook includes, as part of the codebook, another codebook used by the terminal apparatus for feedback on a precoding matrix.

(Supplementary Note 5)

The apparatus according to Supplementary Note 3, wherein the codebook is a same codebook as a codebook used by the terminal apparatus for feedback on a precoding matrix.

(Supplementary Note 6)

The apparatus according to any one of Supplementary Notes 1 to 5, wherein the uplink signals are uplink reference signals transmitted by the terminal apparatus.

(Supplementary Note 7)

The apparatus according to Supplementary Note 6, wherein the uplink reference signals are demodulation reference signals (DMRSs) or sounding reference signals (SRSs).

(Supplementary Note 8)

The apparatus according to any one of Supplementary Notes 1 to 7, wherein the selected candidate channel information is candidate channel information having a high correlation with the generated channel information.

(Supplementary Note 9)

The apparatus according to any one of Supplementary Notes 1 to 8, wherein
the information generation unit is configured to generate a channel quality indicator for the terminal apparatus by measuring channel quality based on uplink signals transmitted by the terminal apparatus, and
the notification unit is configured to notify the first node of the channel quality indicator.

(Supplementary Note 10)

The apparatus according to any one of Supplementary Notes 1 to 9, further comprising:

an information acquisition unit configured to acquire, from the first node, scheduling information generated as a result of the scheduling; and
a transmit processing unit configured to transmit downlink signals based on the scheduling information.

(Supplementary Note 11)

The apparatus according to any one of Supplementary Notes 1 to 10, wherein
the information generation unit is configured to generate a channel quality indicator for the terminal apparatus by measuring channel quality based on uplink signals transmitted by the terminal apparatus, and
the selection unit is configured to select whether or not to notify the first node of the indication information, based on the channel quality indicator.

(Supplementary Note 12)

The apparatus according to Supplementary Note 11, wherein the selection unit is configured to select to notify the first node of the indication information when the channel quality indicator is larger than a threshold, and selects not to notify the first node of the indication information when the channel quality indicator is smaller than the threshold.

(Supplementary Note 13)

The apparatus according to Supplementary Note 12, further comprising an information acquisition unit configured to acquire, from the first node, threshold information indicating the threshold.

(Supplementary Note 14)

The apparatus according to Supplementary Note 13, wherein the information acquisition unit is configured to acquire the threshold information from the first node at time of starting operation of the first node.

(Supplementary Note 15)

The apparatus according to Supplementary Note 13 or 14, wherein
the apparatus is a second node connected to the first node, or a module for the second node, and
the information acquisition unit is configured to acquire the threshold information from the first node at time of adding the second node to the first node.

(Supplementary Note 16)

The apparatus according to any one of Supplementary Notes 1 to 15, wherein
the information generation unit is configured to generate channel information for each of a plurality of terminal apparatuses by performing channel estimation based on uplink signals transmitted by each of the plurality of terminal apparatuses,
the selection unit is configured to select a set of two or more terminal apparatuses suitable for spatial multiplexing or beamforming from among the plurality of terminal apparatuses, based on the channel information for each of the plurality of terminal apparatuses, and
the notification unit is configured to notify the first node of terminal set information indicating the set of the two or more terminal apparatuses.

(Supplementary Note 17)

The apparatus according to Supplementary Note 16, wherein
the selection unit is configured to generate one or more orthogonality indicators indicating degree of orthogonality between channel information of the two or more terminal apparatuses, and
the notification unit is configured to notify the first node of the one or more orthogonality indicators.

(Supplementary Note 18)

The apparatus according to Supplementary Note 16 or 17, wherein
the information generation unit is configured to generate a channel quality indicator for each of the plurality of terminal apparatuses by measuring channel quality based on uplink signals transmitted by each of the plurality of terminal apparatuses, and
the notification unit is configured to notify the first node of a corrected channel quality indicator for the set of the two or more terminal apparatuses.

(Supplementary Note 19)

The apparatus according to any one of Supplementary Notes 16 to 18, wherein the notification unit is configured to notify the first node of corrected channel information for the set of the two or more terminal apparatuses, or indication information indicating candidate channel information corresponding to the corrected channel information.

(Supplementary Note 20)

The apparatus according to any one of Supplementary Notes 1 to 19, wherein the apparatus is a second node connected to the first node, or a module for the second node.

(Supplementary Note 21)

An apparatus comprising:

an information acquisition unit configured to acquire, from a second node which generates channel information for a terminal apparatus by performing channel estimation based on uplink signals transmitted by the terminal apparatus and selects candidate channel information corresponding to the generated channel information from among a group of predetermined candidate channel information, indication information indicating the selected candidate channel information; and
a control unit configured to perform scheduling for the terminal apparatus based on the indication information.

(Supplementary Note 22)

The apparatus according to Supplementary Note 21, wherein
the information acquisition unit is configured to acquire a channel quality indicator for the terminal apparatus from the second node, and
the control unit is configured to perform the scheduling for the terminal apparatus, further based on the channel quality indicator.

(Supplementary Note 23)

The apparatus according to Supplementary Note 21 or 22, further comprising a notification unit configured to notify the second node of scheduling information generated as a result of the scheduling.

(Supplementary Note 24)

The apparatus according to Supplementary Note 23, wherein the scheduling information includes resource allocation information, adaptive modulation coding information, and spatial multiplexing information or beamforming information.

(Supplementary Note 25)

The apparatus according to Supplementary Note 23 or 24, wherein
the scheduling information is information to be used by the second node to transmit downlink signals,
the scheduling information includes resource allocation information, and
the resource allocation information indicates a pattern of radio resources allocated to the terminal apparatus.

(Supplementary Note 26)

The apparatus according to Supplementary Note 25, wherein the resource allocation information indicates, as the pattern, a start position and size of the radio resources allocated to the terminal apparatus.

(Supplementary Note 27)

The apparatus according to any one of Supplementary Notes 23 to 26, wherein the scheduling information includes an index of an element included in a codebook.

(Supplementary Note 28)

The apparatus according to Supplementary Note 27, wherein
the codebook is a group of candidate weight sets for spatial multiplexing or beamforming, and
the element is a candidate weight set for spatial multiplexing or beamforming.

(Supplementary Note 29)

The apparatus according to Supplementary Note 27, wherein
the codebook is a group of predetermined candidate channel information, and
the element is predetermined candidate channel information.

(Supplementary Note 30)

The apparatus according to any one of Supplementary Notes 21 to 29, further comprising a notification unit configured to notify the second node of threshold information indicating a threshold to be compared with a channel quality indicator generated by the second node.

(Supplementary Note 31)

The apparatus according to any one of Supplementary Notes 21 to 30, wherein
the information acquisition unit is configured to acquire, from the second node, terminal set information indicating a set of two or more terminal apparatuses suitable for spatial multiplexing or beamforming, and
the control unit is configured to perform scheduling for the two or more terminal apparatuses based on the terminal set information.

(Supplementary Note 32)

The apparatus according to Supplementary Note 31, wherein
the information acquisition unit is configured to acquire, from the second node, an orthogonality indicator indicating degree of orthogonality between channel information of the two or more terminal apparatuses, a corrected channel quality indicator for the set of the two or more terminal apparatuses, or corrected channel information for the set of the two or more terminal apparatuses or indication information indicating candidate channel information corresponding to the corrected channel information, and
the control unit is configured to perform the scheduling for the two or more terminal apparatuses, further based on the orthogonality indicator, the corrected channel quality indicator, or the corrected channel information or the indication information.

(Supplementary Note 33)

The apparatus according to any one of Supplementary Notes 21 to 32, wherein the apparatus is a first node connected to the second node, or a module for the first node.

(Supplementary Note 34)

An apparatus comprising:

a transmit processing unit configured to transmit uplink signals to a second node which generates channel information by performing channel estimation based on the uplink signals, selects candidate channel information corresponding to the generated channel information from among a group of predetermined candidate channel information, and notifies a first node of indication information indicating the selected candidate channel information; and
a receive processing unit configured to receive downlink signals transmitted by the second node based on a result of scheduling performed by the first node based on the indication information.

(Supplementary Note 35)

The apparatus according to any one of Supplementary Notes 20, 33, and 34, wherein the first node and the second node are nodes in a radio access network and share processing in the radio access network.

(Supplementary Note 36)

The apparatus according to Supplementary Note 35, wherein
the first node is a node that performs processing in a higher layer in a protocol layers of the radio access network, and
the second node is a node that performs processing in a lower layer in the protocol layers of the radio access network.

(Supplementary Note 37)

The apparatus according to any one of Supplementary Notes 20, 33, 34, 35, and 36, wherein the second node is located away from the first node.

(Supplementary Note 38)

A system comprising:

a first node; and
a second node connected to the first node, wherein
the second node

generates channel information for a terminal apparatus by performing channel estimation based on uplink signals transmitted by the terminal apparatus,
selects candidate channel information corresponding to the generated channel information from among a group of predetermined candidate channel information, and
notifies the first node of indication information indicating the selected candidate channel information, and

the first node

acquires the indication information from the second node, and
performs scheduling for the terminal apparatus based on the indication information.

(Supplementary Note 39)

A method comprising:

generating channel information for a terminal apparatus by performing channel estimation based on uplink signals transmitted by the terminal apparatus;
selecting candidate channel information corresponding to the generated channel information from among a group of predetermined candidate channel information; and
notifying a first node, which performs scheduling for the terminal apparatus, of indication information indicating the selected candidate channel information.

(Supplementary Note 40)

A program for causing a processor to execute:

generating channel information for a terminal apparatus by performing channel estimation based on uplink signals transmitted by the terminal apparatus;
selecting candidate channel information corresponding to the generated channel information from among a group of predetermined candidate channel information; and
notifying a first node, which performs scheduling for the terminal apparatus, of indication information indicating the selected candidate channel information.

(Supplementary Note 41)

A readable recording medium storing a program for causing a processor to execute:

generating channel information for a terminal apparatus by performing channel estimation based on uplink signals transmitted by the terminal apparatus;
selecting candidate channel information corresponding to the generated channel information from among a group of predetermined candidate channel information; and
notifying a first node, which performs scheduling for the terminal apparatus, of indication information indicating the selected candidate channel information.

(Supplementary Note 42)

A method comprising:

acquiring, from a second node which generates channel information for a terminal apparatus by performing channel estimation based on uplink signals transmitted by the terminal apparatus and selects candidate channel information corresponding to the generated channel information from among a group of predetermined candidate channel information, indication information indicating the selected candidate channel information; and
performing scheduling for the terminal apparatus based on the indication information.

(Supplementary Note 43)

A program for causing a processor to execute:

acquiring, from a second node which generates channel information for a terminal apparatus by performing channel estimation based on uplink signals transmitted by the terminal apparatus and selects candidate channel information corresponding to the generated channel information from among a group of predetermined candidate channel information, indication information indicating the selected candidate channel information; and
performing scheduling for the terminal apparatus based on the indication information.

(Supplementary Note 44)

A readable recording medium storing a program for causing a processor to execute:

acquiring, from a second node which generates channel information for a terminal apparatus by performing channel estimation based on uplink signals transmitted by the terminal apparatus and selects candidate channel information corresponding to the generated channel information from among a group of predetermined candidate channel information, indication information indicating the selected candidate channel information; and
performing scheduling for the terminal apparatus based on the indication information.

(Supplementary Note 45)

A method comprising:

transmitting uplink signals to a second node which generates channel information by performing channel estimation based on the uplink signals, selects candidate channel information corresponding to the generated channel information from among a group of predetermined candidate channel information, and notifies a first node of indication information indicating the selected candidate channel information; and
receiving downlink signals transmitted by the second node based on a result of scheduling performed by the first node based on the indication information.

(Supplementary Note 46)

A program causing a processor to execute:

transmitting uplink signals to a second node which generates channel information by performing channel estimation based on the uplink signals, selects candidate channel information corresponding to the generated channel information from among a group of predetermined candidate channel information, and notifies a first node of indication information indicating the selected candidate channel information; and
receiving downlink signals transmitted by the second node based on a result of scheduling performed by the first node based on the indication information.

(Supplementary Note 47)

A readable recording medium storing a program for causing a processor to execute:

transmitting uplink signals to a second node which generates channel information by performing channel estimation based on the uplink signals, selects candidate channel information corresponding to the generated channel information from among a group of predetermined candidate channel information, and notifies a first node of indication information indicating the selected candidate channel information; and
receiving downlink signals transmitted by the second node based on a result of scheduling performed by the first node based on the indication information.

(Supplementary Note 48)

A method comprising:

in a second node connected to a first node,

generating channel information for a terminal apparatus by performing channel estimation based on uplink signals transmitted by the terminal apparatus,
selecting candidate channel information corresponding to the generated channel information from among a group of predetermined candidate channel information, and
notifying the first node of indication information indicating the selected candidate channel information; and

in the first node,

acquiring the indication information from the second node, and
performing scheduling for the terminal apparatus based on the indication information.

(Supplementary Note 49)

An apparatus comprising:

an information generation unit configured to generate channel information for a terminal apparatus by performing channel estimation based on uplink signals transmitted by the terminal apparatus, and generate a channel quality indicator for the terminal apparatus by measuring channel quality based on uplink signals transmitted by the terminal apparatus; and
a selection unit configured to select, based on the channel quality indicator, whether or not to notify a first node, which performs scheduling for the terminal apparatus, of the channel information or indication information indicating candidate channel information corresponding to the channel information.

(Supplementary Note 50)

A method comprising:

generating channel information for a terminal apparatus by performing channel estimation based on uplink signals transmitted by the terminal apparatus;
generating a channel quality indicator for the terminal apparatus by measuring channel quality based on uplink signals transmitted by the terminal apparatus; and
selecting, based on the channel quality indicator, whether or not to notify a first node, which performs scheduling for the terminal apparatus, of the channel information or indication information indicating candidate channel information corresponding to the channel information.

(Supplementary Note 51)

A program for causing a processor to execute:

generating channel information for a terminal apparatus by performing channel estimation based on uplink signals transmitted by the terminal apparatus;
generating a channel quality indicator for the terminal apparatus by measuring channel quality based on uplink signals transmitted by the terminal apparatus; and
selecting, based on the channel quality indicator, whether or not to notify a first node, which performs scheduling for the terminal apparatus, of the channel information or indication information indicating candidate channel information corresponding to the channel information.

(Supplementary Note 52)

A readable recording medium storing a program for causing a processor to execute:

generating channel information for a terminal apparatus by performing channel estimation based on uplink signals transmitted by the terminal apparatus;

generating a channel quality indicator for the terminal apparatus by measuring channel quality based on uplink signals transmitted by the terminal apparatus; and

selecting, based on the channel quality indicator, whether or not to notify a first node, which performs scheduling for the terminal apparatus, of the channel information or indication information indicating candidate channel information corresponding to the channel information.

(Supplementary Note 53)

An apparatus comprising:

an information generation unit configured to generate channel information for each of a plurality of terminal apparatuses by performing channel estimation based on uplink signals transmitted by each of the plurality of terminal apparatuses;

a selection unit configured to select a set of two or more terminal apparatuses suitable for spatial multiplexing or beamforming from among the plurality of terminal apparatuses, based on the channel information for each of the plurality of terminal apparatuses; and

a notification unit configured to notify a first node, which performs scheduling for the terminal apparatuses, of terminal set information indicating the set of the two or more terminal apparatuses.

(Supplementary Note 54)

A method comprising:

generating channel information for each of a plurality of terminal apparatuses by performing channel estimation based on uplink signals transmitted by each of the plurality of terminal apparatuses;

selecting a set of two or more terminal apparatuses suitable for spatial multiplexing or beamforming from among the plurality of terminal apparatuses, based on the channel information for each of the plurality of terminal apparatuses; and

notifying a first node, which performs scheduling for the terminal apparatuses, of terminal set information indicating the set of the two or more terminal apparatuses.

(Supplementary Note 55)

A program for causing a processor to execute:

generating channel information for each of a plurality of terminal apparatuses by performing channel estimation based on uplink signals transmitted by each of the plurality of terminal apparatuses;

selecting a set of two or more terminal apparatuses suitable for spatial multiplexing or beamforming from among the plurality of terminal apparatuses, based on the channel information for each of the plurality of terminal apparatuses; and

notifying a first node, which performs scheduling for the terminal apparatuses, of terminal set information indicating the set of the two or more terminal apparatuses.

(Supplementary Note 56)

A readable recording medium storing a program for causing a processor to execute:

generating channel information for each of a plurality of terminal apparatuses by performing channel estimation based on uplink signals transmitted by each of the plurality of terminal apparatuses;

selecting a set of two or more terminal apparatuses suitable for spatial multiplexing or beamforming from among the plurality of terminal apparatuses, based on the channel information for each of the plurality of terminal apparatuses; and

notifying a first node, which performs scheduling for the terminal apparatuses, of terminal set information indicating the set of the two or more terminal apparatuses.

(Supplementary Note 57)

An apparatus comprising:

an information acquisition unit configured to acquire, from a second node which generates channel information for each of a plurality of terminal apparatuses by performing channel estimation based on uplink signals transmitted by each of the plurality of terminal apparatuses, and selects a set of two or more terminal apparatuses suitable for spatial multiplexing or beamforming from among the plurality of terminal apparatuses based on the channel information for each of the plurality of terminal apparatuses, the terminal set information indicating the set of the two or more terminal apparatuses; and
a control unit configured to perform scheduling for the two or more terminal apparatuses based on the terminal set information.

(Supplementary Note 58)

A method comprising:

acquiring, from a second node which generates channel information for each of a plurality of terminal apparatuses by performing channel estimation based on uplink signals transmitted by each of the plurality of terminal apparatuses, and selects a set of two or more terminal apparatuses suitable for spatial multiplexing or beamforming from among the plurality of terminal apparatuses based on the channel information for each of the plurality of terminal apparatuses, the terminal set information indicating the set of the two or more terminal apparatuses; and
performing scheduling for the two or more terminal apparatuses based on the terminal set information.

(Supplementary Note 59)

A program for causing a processor to execute:

acquiring, from a second node which generates channel information for each of a plurality of terminal apparatuses by performing channel estimation based on uplink signals transmitted by each of the plurality of terminal apparatuses, and selects a set of two or more terminal apparatuses suitable for spatial multiplexing or beamforming from among the plurality of terminal apparatuses based on the channel information for each of the plurality of terminal apparatuses, the terminal set information indicating the set of the two or more terminal apparatuses; and
performing scheduling for the two or more terminal apparatuses based on the terminal set information.

(Supplementary Note 60)

A readable recording medium storing a program for causing a processor to execute:

acquiring, from a second node which generates channel information for each of a plurality of terminal apparatuses by performing channel estimation based on uplink signals transmitted by each of the plurality of terminal apparatuses, and selects a set of two or more terminal apparatuses suitable for spatial multiplexing or beamforming from among the plurality of terminal apparatuses based on the channel information for each of the plurality of terminal apparatuses, the terminal set information indicating the set of the two or more terminal apparatuses; and
performing scheduling for the two or more terminal apparatuses based on the terminal set information.

(Supplementary Note 61)

An apparatus comprising:

a control unit configured to perform scheduling for a terminal apparatus; and
a notification unit configured to notify a second node, which transmits downlink signals to the terminal apparatus, of scheduling information generated as a result of the scheduling, wherein
the scheduling information is information to be used by the second node to transmit the downlink signals,
the scheduling information includes resource allocation information, and
the resource allocation information indicates a pattern of radio resources allocated to the terminal apparatus.

(Supplementary Note 62)

A method comprising:

performing scheduling for a terminal apparatus; and
notifying a second node, which transmits downlink signals to the terminal apparatus, of scheduling information generated as a result of the scheduling, wherein
the scheduling information is information to be used by the second node to transmit the downlink signals,
the scheduling information includes resource allocation information, and
the resource allocation information indicates a pattern of radio resources allocated to the terminal apparatus.

(Supplementary Note 63)

A program for causing a processor to execute:

performing scheduling for a terminal apparatus; and
notifying a second node, which transmits downlink signals to the terminal apparatus, of scheduling information generated as a result of the scheduling, wherein
the scheduling information is information to be used by the second node to transmit the downlink signals,
the scheduling information includes resource allocation information, and
the resource allocation information indicates a pattern of radio resources allocated to the terminal apparatus.

(Supplementary Note 64)

A readable recording medium storing a program for causing processor to execute:

performing scheduling for a terminal apparatus; and
notifying a second node, which transmits downlink signals to the terminal apparatus, of scheduling information generated as a result of the scheduling, wherein
the scheduling information is information to be used by the second node to transmit the downlink signals,
the scheduling information includes resource allocation information, and
the resource allocation information indicates a pattern of radio resources allocated to the terminal apparatus.

(Supplementary Note 65)

An apparatus comprising:

an information acquisition unit configured to acquire, from a first node performing scheduling for a terminal apparatus, scheduling information generated as a result of the scheduling; and
a transmit processing unit configured to transmit downlink signals based on the scheduling information, wherein
the scheduling information includes resource allocation information, and
the resource allocation information indicates a pattern of radio resources allocated to the terminal apparatus.

(Supplementary Note 66)

A method comprising:

acquiring, from a first node performing scheduling for a terminal apparatus, scheduling information generated as a result of the scheduling; and
transmitting downlink signals based on the scheduling information, wherein
the scheduling information includes resource allocation information, and
the resource allocation information indicates a pattern of radio resources allocated to the terminal apparatus.

(Supplementary Note 67)

A program for causing a processor to execute:

acquiring, from a first node performing scheduling for a terminal apparatus, scheduling information generated as a result of the scheduling; and
transmitting downlink signals based on the scheduling information, wherein
the scheduling information includes resource allocation information, and
the resource allocation information indicates a pattern of radio resources allocated to the terminal apparatus.

(Supplementary Note 68)

A readable recording medium storing a program for causing a processor to execute:

acquiring, from a first node performing scheduling for a terminal apparatus, scheduling information generated as a result of the scheduling; and
transmitting downlink signals based on the scheduling information, wherein
the scheduling information includes resource allocation information, and
the resource allocation information indicates a pattern of radio resources allocated to the terminal apparatus.

(Supplementary Note 69)

The apparatus according to any one of Supplementary Notes 49, 53, and 65, wherein the apparatus is a second node connected to the first node, or a module for the second node.

(Supplementary Note 70)

The apparatus according to Supplementary Note 57 or 61, wherein the apparatus is a first node connected to the second node, or a module for the first node.

This application claims priority based on Japanese Patent Application No. 2015-170226 filed on August 31, 2015, the entire disclosure of which is incorporated herein.

Reference Signs List

| 1 | System |
| 10, 80 | Communication area |
| 70 | Evolved node B (eNB) |
| 90 | User equipment (UE) |
| 20 | Transmission line |
| 100 | Remote node |
| 141, 151 | Information generation unit |
| 143, 153 | Selection unit |
| 145, 155 | Notification unit |
| 147 | Information acquisition unit |
| 149 | Transmit processing unit |
| 200 | Centralized node |
| 231, 241 | Information acquisition unit |
| 233, 243 | Control unit |
| 235 | Notification unit |
| 300 | Terminal apparatus |
| 331, 341 | Transmit processing unit |
| 333, 343 | Receive processing unit |

**Claims**

1. An apparatus comprising:

an information generation unit configured to generate channel information for a terminal apparatus by performing channel estimation based on uplink signals transmitted by the terminal apparatus;
a selection unit configured to select candidate channel information corresponding to the generated channel information from among a group of predetermined candidate channel information; and

a notification unit configured to notify a first node, which performs scheduling for the terminal apparatus, of indication information indicating the selected candidate channel information.

2. The apparatus according to claim 1, wherein the indication information is an index of the selected candidate channel information.

3. The apparatus according to claim 1 or 2, wherein the group of predetermined candidate channel information is a codebook including predetermined candidate channel information as elements.

4. The apparatus according to claim 3, wherein the codebook includes, as part of the codebook, another codebook used by the terminal apparatus for feedback on a precoding matrix.

5. The apparatus according to claim 3, wherein the codebook is a same codebook as a codebook used by the terminal apparatus for feedback on a precoding matrix.

6. The apparatus according to any one of claims 1 to 5, wherein the uplink signals are uplink reference signals transmitted by the terminal apparatus.

7. The apparatus according to claim 6, wherein the uplink reference signals are demodulation reference signals (DMRSs) or sounding reference signals (SRSs).

8. The apparatus according to any one of claims 1 to 7, wherein the selected candidate channel information is candidate channel information having a high correlation with the generated channel information.

9. The apparatus according to any one of claims 1 to 8, wherein

the information generation unit is configured to generate a channel quality indicator for the terminal apparatus by measuring channel quality based on uplink signals transmitted by the terminal apparatus, and

the notification unit is configured to notify the first node of the channel quality indicator.

10. The apparatus according to any one of claims 1 to 9, further comprising:

an information acquisition unit configured to acquire, from the first node, scheduling information generated as a result of the scheduling; and

a transmit processing unit configured to transmit downlink signals based on the scheduling information.

11. The apparatus according to any one of claims 1 to 10, wherein

the information generation unit is configured to generate a channel quality indicator for the terminal apparatus by measuring channel quality based on uplink signals transmitted by the terminal apparatus, and

the selection unit is configured to select whether or not to notify the first node of the indication information, based on the channel quality indicator.

12. The apparatus according to claim 11, wherein the selection unit is configured to select to notify the first node of the indication information when the channel quality indicator is larger than a threshold, and selects not to notify the first node of the indication information when the channel quality indicator is smaller than the threshold.

13. The apparatus according to claim 12, further comprising an information acquisition unit configured to acquire, from the first node, threshold information indicating the threshold.

14. The apparatus according to claim 13, wherein the information acquisition unit is configured to acquire the threshold information from the first node at time of starting operation of the first node.

15. The apparatus according to claim 13 or 14, wherein

the apparatus is a second node connected to the first node, or a module for the second node, and

the information acquisition unit is configured to acquire the threshold information from the first node at time of adding the second node to the first node.

16. The apparatus according to any one of claims 1 to 15, wherein

the information generation unit is configured to generate channel information for each of a plurality of terminal apparatuses by performing channel estimation based on uplink signals transmitted by each of the plurality of terminal apparatuses,
the selection unit is configured to select a set of two or more terminal apparatuses suitable for spatial multiplexing or beamforming from among the plurality of terminal apparatuses, based on the channel information for each of the plurality of terminal apparatuses, and
the notification unit is configured to notify the first node of terminal set information indicating the set of the two or more terminal apparatuses.

17. The apparatus according to claim 16, wherein

the selection unit is configured to generate one or more orthogonality indicators indicating degree of orthogonality between channel information of the two or more terminal apparatuses, and
the notification unit is configured to notify the first node of the one or more orthogonality indicators.

18. The apparatus according to claim 16 or 17, wherein

the information generation unit is configured to generate a channel quality indicator for each of the plurality of terminal apparatuses by measuring channel quality based on uplink signals transmitted by each of the plurality of terminal apparatuses, and
the notification unit is configured to notify the first node of a corrected channel quality indicator for the set of the two or more terminal apparatuses.

19. The apparatus according to any one of claims 16 to 18, wherein the notification unit is configured to notify the first node of corrected channel information for the set of the two or more terminal apparatuses, or indication information indicating candidate channel information corresponding to the corrected channel information.

20. The apparatus according to any one of claims 1 to 19, wherein the apparatus is a second node connected to the first node, or a module for the second node.

21. An apparatus comprising:

an information acquisition unit configured to acquire, from a second node which generates channel information for a terminal apparatus by performing channel estimation based on uplink signals transmitted by the terminal apparatus and selects candidate channel information corresponding to the generated channel information from among a group of predetermined candidate channel information, indication information indicating the selected candidate channel information; and
a control unit configured to perform scheduling for the terminal apparatus based on the indication information.

22. The apparatus according to claim 21, wherein

the information acquisition unit is configured to acquire a channel quality indicator for the terminal apparatus from the second node, and
the control unit is configured to perform the scheduling for the terminal apparatus, further based on the channel quality indicator.

23. The apparatus according to claim 21 or 22, further comprising a notification unit configured to notify the second node of scheduling information generated as a result of the scheduling.

24. The apparatus according to claim 23, wherein the scheduling information includes resource allocation information, adaptive modulation coding information, and spatial multiplexing information or beamforming information.

25. The apparatus according to claim 23 or 24, wherein

the scheduling information is information to be used by the second node to transmit downlink signals,
the scheduling information includes resource allocation information, and
the resource allocation information indicates a pattern of radio resources allocated to the terminal apparatus.

26. The apparatus according to claim 25, wherein the resource allocation information indicates, as the pattern, a start position and size of the radio resources allocated to the terminal apparatus.

27. The apparatus according to any one of claims 23 to 26, wherein the scheduling information includes an index of an element included in a codebook.

28. The apparatus according to claim 27, wherein

the codebook is a group of candidate weight sets for spatial multiplexing or beamforming, and
the element is a candidate weight set for spatial multiplexing or beamforming.

29. The apparatus according to claim 27, wherein

the codebook is a group of predetermined candidate channel information, and
the element is predetermined candidate channel information.

30. The apparatus according to any one of claims 21 to 29, further comprising a notification unit configured to notify the second node of threshold information indicating a threshold to be compared with a channel quality indicator generated by the second node.

31. The apparatus according to any one of claims 21 to 30, wherein

the information acquisition unit is configured to acquire, from the second node, terminal set information indicating a set of two or more terminal apparatuses suitable for spatial multiplexing or beamforming, and
the control unit is configured to perform scheduling for the two or more terminal apparatuses based on the terminal set information.

32. The apparatus according to claim 31, wherein

the information acquisition unit is configured to acquire, from the second node, an orthogonality indicator indicating degree of orthogonality between channel information of the two or more terminal apparatuses, a corrected channel quality indicator for the set of the two or more terminal apparatuses, or corrected channel information for the set of the two or more terminal apparatuses or indication information indicating candidate channel information corresponding to the corrected channel information, and
the control unit is configured to perform the scheduling for the two or more terminal apparatuses, further based on the orthogonality indicator, the corrected channel quality indicator, or the corrected channel information or the indication information.

33. The apparatus according to any one of claims 21 to 32, wherein the apparatus is a first node connected to the second node, or a module for the first node.

34. An apparatus comprising:

a transmit processing unit configured to transmit uplink signals to a second node which generates channel information by performing channel estimation based on the uplink signals, selects candidate channel information corresponding to the generated channel information from among a group of predetermined candidate channel information, and notifies a first node of indication information indicating the selected candidate channel information; and
a receive processing unit configured to receive downlink signals transmitted by the second node based on a result of scheduling performed by the first node based on the indication information.

35. The apparatus according to any one of claims 20, 33, and 34, wherein the first node and the second node are nodes in a radio access network and share processing in the radio access network.

**36.** The apparatus according to claim 35, wherein

the first node is a node that performs processing in a higher layer in protocol layers of the radio access network, and
the second node is a node that performs processing in a lower layer in the protocol layers of the radio access network.

**37.** The apparatus according to any one of claims 20, 33, 34, 35, and 36, wherein the second node is located away from the first node.

**38.** A system comprising:

a first node; and
a second node connected to the first node, wherein
the second node

generates channel information for a terminal apparatus by performing channel estimation based on uplink signals transmitted by the terminal apparatus,
selects candidate channel information corresponding to the generated channel information from among a group of predetermined candidate channel information, and
notifies the first node of indication information indicating the selected candidate channel information, and

the first node

acquires the indication information from the second node, and
performs scheduling for the terminal apparatus based on the indication information.

**39.** A method comprising:

generating channel information for a terminal apparatus by performing channel estimation based on uplink signals transmitted by the terminal apparatus;
selecting candidate channel information corresponding to the generated channel information from among a group of predetermined candidate channel information; and
notifying a first node, which performs scheduling for the terminal apparatus, of indication information indicating the selected candidate channel information.

**40.** A program for causing a processor to execute:

generating channel information for a terminal apparatus by performing channel estimation based on uplink signals transmitted by the terminal apparatus;
selecting candidate channel information corresponding to the generated channel information from among a group of predetermined candidate channel information; and
notifying a first node, which performs scheduling for the terminal apparatus, of indication information indicating the selected candidate channel information.

**41.** A readable recording medium storing a program for causing a processor to execute:

generating channel information for a terminal apparatus by performing channel estimation based on uplink signals transmitted by the terminal apparatus;
selecting candidate channel information corresponding to the generated channel information from among a group of predetermined candidate channel information; and
notifying a first node, which performs scheduling for the terminal apparatus, of indication information indicating the selected candidate channel information.

**42.** A method comprising:

acquiring, from a second node which generates channel information for a terminal apparatus by performing channel estimation based on uplink signals transmitted by the terminal apparatus and selects candidate channel information corresponding to the generated channel information from among a group of predetermined candidate channel information, indication information indicating the selected candidate channel information; and performing scheduling for the terminal apparatus based on the indication information.

**43.** A program for causing a processor to execute:

acquiring, from a second node which generates channel information for a terminal apparatus by performing channel estimation based on uplink signals transmitted by the terminal apparatus and selects candidate channel information corresponding to the generated channel information from among a group of predetermined candidate channel information, indication information indicating the selected candidate channel information; and performing scheduling for the terminal apparatus based on the indication information.

**44.** A readable recording medium storing a program for causing a processor to execute:

acquiring, from a second node which generates channel information for a terminal apparatus by performing channel estimation based on uplink signals transmitted by the terminal apparatus and selects candidate channel information corresponding to the generated channel information from among a group of predetermined candidate channel information, indication information indicating the selected candidate channel information; and performing scheduling for the terminal apparatus based on the indication information.

**45.** A method comprising:

transmitting uplink signals to a second node which generates channel information by performing channel estimation based on the uplink signals, selects candidate channel information corresponding to the generated channel information from among a group of predetermined candidate channel information, and notifies a first node of indication information indicating the selected candidate channel information; and receiving downlink signals transmitted by the second node based on a result of scheduling performed by the first node based on the indication information.

**46.** A program causing a processor to execute:

transmitting uplink signals to a second node which generates channel information by performing channel estimation based on the uplink signals, selects candidate channel information corresponding to the generated channel information from among a group of predetermined candidate channel information, and notifies a first node of indication information indicating the selected candidate channel information; and receiving downlink signals transmitted by the second node based on a result of scheduling performed by the first node based on the indication information.

**47.** A readable recording medium storing a program for causing a processor to execute:

transmitting uplink signals to a second node which generates channel information by performing channel estimation based on the uplink signals, selects candidate channel information corresponding to the generated channel information from among a group of predetermined candidate channel information, and notifies a first node of indication information indicating the selected candidate channel information; and receiving downlink signals transmitted by the second node based on a result of scheduling performed by the first node based on the indication information.

**48.** A method comprising:

in a second node connected to a first node,

generating channel information for a terminal apparatus by performing channel estimation based on uplink signals transmitted by the terminal apparatus, selecting candidate channel information corresponding to the generated channel information from among a group of predetermined candidate channel information, and notifying the first node of indication information indicating the selected candidate channel information; and

in the first node,

acquiring the indication information from the second node, and

performing scheduling for the terminal apparatus based on the indication information.

49. An apparatus comprising:

an information generation unit configured to generate channel information for a terminal apparatus by performing channel estimation based on uplink signals transmitted by the terminal apparatus, and generate a channel quality indicator for the terminal apparatus by measuring channel quality based on uplink signals transmitted by the terminal apparatus; and

a selection unit configured to select, based on the channel quality indicator, whether or not to notify a first node, which performs scheduling for the terminal apparatus, of the channel information or indication information indicating candidate channel information corresponding to the channel information.

50. A method comprising:

generating channel information for a terminal apparatus by performing channel estimation based on uplink signals transmitted by the terminal apparatus;

generating a channel quality indicator for the terminal apparatus by measuring channel quality based on uplink signals transmitted by the terminal apparatus; and

selecting, based on the channel quality indicator, whether or not to notify a first node, which performs scheduling for the terminal apparatus, of the channel information or indication information indicating candidate channel information corresponding to the channel information.

51. A program for causing a processor to execute:

generating channel information for a terminal apparatus by performing channel estimation based on uplink signals transmitted by the terminal apparatus;

generating a channel quality indicator for the terminal apparatus by measuring channel quality based on uplink signals transmitted by the terminal apparatus; and

selecting, based on the channel quality indicator, whether or not to notify a first node, which performs scheduling for the terminal apparatus, of the channel information or indication information indicating candidate channel information corresponding to the channel information.

52. A readable recording medium storing a program for causing a processor to execute:

generating channel information for a terminal apparatus by performing channel estimation based on uplink signals transmitted by the terminal apparatus;

generating a channel quality indicator for the terminal apparatus by measuring channel quality based on uplink signals transmitted by the terminal apparatus; and

selecting, based on the channel quality indicator, whether or not to notify a first node, which performs scheduling for the terminal apparatus, of the channel information or indication information indicating candidate channel information corresponding to the channel information.

53. An apparatus comprising:

an information generation unit configured to generate channel information for each of a plurality of terminal apparatuses by performing channel estimation based on uplink signals transmitted by each of the plurality of terminal apparatuses;

a selection unit configured to select a set of two or more terminal apparatuses suitable for spatial multiplexing or beamforming from among the plurality of terminal apparatuses, based on the channel information for each of the plurality of terminal apparatuses; and

a notification unit configured to notify a first node, which performs scheduling for the terminal apparatuses, of terminal set information indicating the set of the two or more terminal apparatuses.

54. A method comprising:

generating channel information for each of a plurality of terminal apparatuses by performing channel estimation based on uplink signals transmitted by each of the plurality of terminal apparatuses;

selecting a set of two or more terminal apparatuses suitable for spatial multiplexing or beamforming from among the plurality of terminal apparatuses, based on the channel information for each of the plurality of terminal apparatuses; and

notifying a first node, which performs scheduling for the terminal apparatuses, of terminal set information indicating the set of the two or more terminal apparatuses.

55. A program for causing a processor to execute:

generating channel information for each of a plurality of terminal apparatuses by performing channel estimation based on uplink signals transmitted by each of the plurality of terminal apparatuses;

selecting a set of two or more terminal apparatuses suitable for spatial multiplexing or beamforming from among the plurality of terminal apparatuses, based on the channel information for each of the plurality of terminal apparatuses; and

notifying a first node, which performs scheduling for the terminal apparatuses, of terminal set information indicating the set of the two or more terminal apparatuses.

56. A readable recording medium storing a program for causing a processor to execute:

generating channel information for each of a plurality of terminal apparatuses by performing channel estimation based on uplink signals transmitted by each of the plurality of terminal apparatuses;

selecting a set of two or more terminal apparatuses suitable for spatial multiplexing or beamforming from among the plurality of terminal apparatuses, based on the channel information for each of the plurality of terminal apparatuses; and

notifying a first node, which performs scheduling for the terminal apparatuses, of terminal set information indicating the set of the two or more terminal apparatuses.

57. An apparatus comprising:

an information acquisition unit configured to acquire, from a second node which generates channel information for each of a plurality of terminal apparatuses by performing channel estimation based on uplink signals transmitted by each of the plurality of terminal apparatuses, and selects a set of two or more terminal apparatuses suitable for spatial multiplexing or beamforming from among the plurality of terminal apparatuses based on the channel information for each of the plurality of terminal apparatuses, the terminal set information indicating the set of the two or more terminal apparatuses; and

a control unit configured to perform scheduling for the two or more terminal apparatuses based on the terminal set information.

58. A method comprising:

acquiring, from a second node which generates channel information for each of a plurality of terminal apparatuses by performing channel estimation based on uplink signals transmitted by each of the plurality of terminal apparatuses, and selects a set of two or more terminal apparatuses suitable for spatial multiplexing or beamforming from among the plurality of terminal apparatuses based on the channel information for each of the plurality of terminal apparatuses, the terminal set information indicating the set of the two or more terminal apparatuses; and

performing scheduling for the two or more terminal apparatuses based on the terminal set information.

59. A program for causing a processor to execute:

acquiring, from a second node which generates channel information for each of a plurality of terminal apparatuses by performing channel estimation based on uplink signals transmitted by each of the plurality of terminal apparatuses, and selects a set of two or more terminal apparatuses suitable for spatial multiplexing or beamforming from among the plurality of terminal apparatuses based on the channel information for each of the plurality of terminal apparatuses, the terminal set information indicating the set of the two or more terminal apparatuses; and

performing scheduling for the two or more terminal apparatuses based on the terminal set information.

60. A readable recording medium storing a program for causing a processor to execute:

acquiring, from a second node which generates channel information for each of a plurality of terminal apparatuses by performing channel estimation based on uplink signals transmitted by each of the plurality of terminal apparatuses, and selects a set of two or more terminal apparatuses suitable for spatial multiplexing or beamforming from among the plurality of terminal apparatuses based on the channel information for each of the plurality of terminal apparatuses, the terminal set information indicating the set of the two or more terminal apparatuses; and performing scheduling for the two or more terminal apparatuses based on the terminal set information.

**61.** An apparatus comprising:

a control unit configured to perform scheduling for a terminal apparatus; and
a notification unit configured to notify a second node, which transmits downlink signals to the terminal apparatus, of scheduling information generated as a result of the scheduling, wherein
the scheduling information is information to be used by the second node to transmit the downlink signals,
the scheduling information includes resource allocation information, and
the resource allocation information indicates a pattern of radio resources allocated to the terminal apparatus.

**62.** A method comprising:

performing scheduling for a terminal apparatus; and
notifying a second node, which transmits downlink signals to the terminal apparatus, of scheduling information generated as a result of the scheduling, wherein
the scheduling information is information to be used by the second node to transmit the downlink signals,
the scheduling information includes resource allocation information, and
the resource allocation information indicates a pattern of radio resources allocated to the terminal apparatus.

**63.** A program for causing a processor to execute:

performing scheduling for a terminal apparatus; and
notifying a second node, which transmits downlink signals to the terminal apparatus, of scheduling information generated as a result of the scheduling, wherein
the scheduling information is information to be used by the second node to transmit the downlink signals,
the scheduling information includes resource allocation information, and
the resource allocation information indicates a pattern of radio resources allocated to the terminal apparatus.

**64.** A readable recording medium storing a program for causing processor to execute:

performing scheduling for a terminal apparatus; and
notifying a second node, which transmits downlink signals to the terminal apparatus, of scheduling information generated as a result of the scheduling, wherein
the scheduling information is information to be used by the second node to transmit the downlink signals,
the scheduling information includes resource allocation information, and
the resource allocation information indicates a pattern of radio resources allocated to the terminal apparatus.

**65.** An apparatus comprising:

an information acquisition unit configured to acquire, from a first node performing scheduling for a terminal apparatus, scheduling information generated as a result of the scheduling; and
a transmit processing unit configured to transmit downlink signals based on the scheduling information, wherein
the scheduling information includes resource allocation information, and
the resource allocation information indicates a pattern of radio resources allocated to the terminal apparatus.

**66.** A method comprising:

acquiring, from a first node performing scheduling for a terminal apparatus, scheduling information generated as a result of the scheduling; and
transmitting downlink signals based on the scheduling information, wherein
the scheduling information includes resource allocation information, and
the resource allocation information indicates a pattern of radio resources allocated to the terminal apparatus.

**EP 3 346 747 A1**

**67.** A program for causing a processor to execute:

acquiring, from a first node performing scheduling for a terminal apparatus, scheduling information generated as a result of the scheduling; and
transmitting downlink signals based on the scheduling information, wherein
the scheduling information includes resource allocation information, and
the resource allocation information indicates a pattern of radio resources allocated to the terminal apparatus.

**68.** A readable recording medium storing a program for causing a processor to execute:

acquiring, from a first node performing scheduling for a terminal apparatus, scheduling information generated as a result of the scheduling; and
transmitting downlink signals based on the scheduling information, wherein
the scheduling information includes resource allocation information, and
the resource allocation information indicates a pattern of radio resources allocated to the terminal apparatus.

**69.** The apparatus according to any one of claims 49, 53, and 65, wherein the apparatus is a second node connected to the first node, or a module for the second node.

**70.** The apparatus according to claim 57 or 61, wherein the apparatus is a first node connected to the second node, or a module for the first node.

Figure 1

70

79

## L2 PROCESSING UNIT

75

PHYSICAL-LAYER
RECEIVE
PROCESSING UNIT

77

PHYSICAL-LAYER
TRANSMIT
PROCESSING UNIT

71

ANTENNA
RECEPTION UNIT

73

ANTENNA
TRANSMISSION
UNIT

90

# Figure 2

Figure 3

Figure 4

Figure 5

Figure 6

300

330

PROCESSING UNIT

310

RADIO
COMMUNICATION UNIT

331

TRANSMIT
PROCESSING UNIT

320

STORAGE UNIT

333

RECEIVE
PROCESSING UNIT

# Figure 7

TERMINAL APPARATUS 300

REMOTE NODE 100

CENTRALIZED NODE 200

UPLINK SIGNALS S401

S403
GENERATE CHANNEL INFORMATION AND CQI

S405
SELECT CANDIDATE CHANNEL INFORMATION

INDICATION INFORMATION AND CQI S407

S409
PERFORM SCHEDULING BASED ON INDICATION INFORMATION AND CQI

SCHEDULING INFORMATION S411

DATA AND CONTROL INFORMATION S413

DOWNLINK SIGNALS S415

Figure 8

Figure 9

Figure 10

| TERMINAL APPARATUS 300 | REMOTE NODE 100 | CENTRALIZED NODE 200 |

UPLINK SIGNALS S461

S463

GENERATE CHANNEL
INFORMATION AND CQIS

S465

SELECT SET OF TWO OR MORE
TERMINAL APPARATUSES
SUITABLE FOR SPATIAL
MULTIPLEXING OR BF

S467

GENERATE CORRECTED
CQIS AND CORRECTED
CHANNEL INFORMATION

CHANNEL
INFORMATION    S469
AND CQIS

TERMINAL SET INFORMATION,
ORTHOGONALITY INDICATOR,
CORRECTED CQIS, AND
CORRECTED CHANNEL S471
INFORMATION

S473

PERFORM SCHEDULING BASED
ON TERMINAL SET
INFORMATION AND OTHERS

SCHEDULING    S475
INFORMATION

DATA AND
CONTROL    S477
INFORMATION

DOWNLINK SIGNALS S479

# Figure 11

Figure 12

100

151

INFORMATION
GENERATION UNIT

153

SELECTION UNIT

155

NOTIFICATION UNIT

# Figure 13

200

241

INFORMATION
ACQUISITION UNIT

243

CONTROL UNIT

# Figure 14

Figure 15

Figure 16

## INTERNATIONAL SEARCH REPORT

| International application No. |
| --- |
| PCT/JP2016/074375 |

A.  CLASSIFICATION OF SUBJECT MATTER
*H04W16/28*(2009.01)i, *H04W28/02*(2009.01)i, *H04W88/08*(2009.01)i

According to International Patent Classification (IPC) or to both national classification and IPC

B.  FIELDS SEARCHED

Minimum documentation searched (classification system followed by classification symbols)
H04W16/28, H04W28/02, H04W88/08

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | WO 2013/168791 A1  (Sharp Corp.), 14 November 2013 (14.11.2013), paragraph [0301]; fig. 1 & EP 2849504 A1 paragraph [0322]; fig. 1 & JP 2013-236287 A      & CN 104272820 A & US 2015/0124673 A1 | 1-60 |
| A | Kenji MIYAMOTO et al., "Proposal of Uplink CoMP Scheme in Base Station Architecture Splitting LTE PHY Layer Functions", Proceedings of The 2015 IEICE Communications Society Conference 1, 25 August 2015 (25.08.2015), page 290 | 1-60 |

| ☒   Further documents are listed in the continuation of Box C. | ☐   See patent family annex. |
| --- | --- |

\*    Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
| --- | --- |
| 04 November 2016 (04.11.16) | 15 November 2016 (15.11.16) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

**INTERNATIONAL SEARCH REPORT**

International application No.

PCT/JP2016/074375

C (Continuation).   DOCUMENTS CONSIDERED TO BE RELEVANT

| Category* | Citation of document, with indication, where appropriate, of the relevant passages | Relevant to claim No. |
|---|---|---|
| A | NGMN Alliance, Liaison on NGMN 5G White Paper, 3GPP TSG-SA#68 SP-150187, 2015.06.19, p.124, http://www.3gpp.org/ftp/tsg_sa/TSG_SA/TSGS_68/ Docs/SP-150187.zip | 1-60 |
| X<br>A | JP 2011-530862 A  (Alcatel-Lucent USA Inc.), 22 December 2011 (22.12.2011), paragraphs [0027] to [0028], [0030], [0034]; fig. 1, 3A & US 2010/0034151 A1 paragraphs [0033] to [0034], [0036], [0040]; fig. 1, 3A & WO 2010/016865 A1    & KR 10-2011-0026012 A & EP 2314116 A1        & CN 102113395 A | 61-70<br>49-60 |
| A | JP 2014-531824 A  (Samsung Electronics Co., Ltd.), 27 November 2014 (27.11.2014), paragraphs [0069] to [0070]; fig. 4 & US 2013/0077569 A1 paragraphs [0063] to [0064]; fig. 4 & WO 2013/043010 A1    & CN 103828274 A & EP 2767016 A1 | 53-60 |

Form PCT/ISA/210 (continuation of second sheet) (January 2015)

## INTERNATIONAL SEARCH REPORT

| International application No. |
|---|
| PCT/JP2016/074375 |

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III        Observations where unity of invention is lacking (Continuation of item 3 of first sheet)**

This International Searching Authority found multiple inventions in this international application, as follows:
        See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

| **INTERNATIONAL SEARCH REPORT** | International application No. |
|---|---|
| | PCT/JP2016/074375 |

Continuation of Box No.III of continuation of first sheet(2)

Document 1: WO 2013/168791 A1 (Sharp Corp.), 14 November 2013 (14.11.2013), paragraph [0301]; fig. 1 & EP 2849504 A1, paragraph [0322]; fig. 1 & JP 2013-236287 A & CN 104272820 A & US 2015/0124673 A1

Claims are classified into the following four inventions.

(Invention 1) claims 1-48

Claims 1-48 are classified as Invention 1 because they have a special technical feature of "An apparatus...that selects, from among a group of predetermined channel information candidates, a channel information candidate corresponding to the generated channel information and...transmits, to a first node that performs scheduling about the terminal apparatus, indication information indicating the selected channel information candidate."

(Invention 2) claims 49-52, 69

Claims 49-52 and 69 have, together with claim 1 classified as Invention 1, a common technical feature of "An apparatus...that performs, on the basis of an uplink signal transmitted by a terminal apparatus, a channel estimation, thereby generating channel information about the terminal apparatus".

However, the above-said technical feature cannot be considered to be a special technical feature, since the technical feature does not make a contribution over the prior art in the light of the contents disclosed in the document 1 (see paragraph [0301], fig. 1).

Further, there is no other same or corresponding special technical feature between claims 49-52, 69 and claim 1.

Further, claims 49-52, 69 are not dependent on claim 1.

Further, claims 49-52, 69 have no relationship such that these claims are substantially same as or equivalent to any claim classified into Invention 1.

Consequently, claims 49-52, 69 cannot be classified into Invention 1.

Further, claims 49-52 and 69 are classified as Invention 2 because they have a special technical feature of "An apparatus...selects, on the basis of the channel quality index, either to transmit or not to transmit, to a first node that performs scheduling about the terminal apparatus, either the channel information or indication information indicating a channel information candidate corresponding to the channel information."

(Invention 3) claims 53-60, 70

Claims 53-60 and 70 have, together with claim 1 classified as Invention 1 or with claim 49 classified as Invention 2, a common technical feature of "An apparatus...that performs, on the basis of an uplink signal transmitted by a terminal apparatus, a channel estimation, thereby generating channel information about the terminal apparatus".

However, the above-said technical feature cannot be considered to be a special technical feature, since the technical feature does not make a contribution over the prior art in the light of the contents disclosed in the document 1 (see paragraph [0301], fig. 1).

Further, there is no other same or corresponding special technical feature between claims 53-60, 70 and claims 1, 49.

Further, claim 53-60, 70 are not dependent on claim 1.

Further, claims 53-60, 70 have no relationship such that these claims are substantially same as or equivalent to any claim classified into Inventions 1-2.

(Continued to next extra sheet)

Form PCT/ISA/210 (extra sheet) (January 2015)

Consequently, claims 53-60, 70 cannot be classified into either Invention 1 or Invention 2.

Further, claims 53-60 and 70 are classified as Invention 3 because they have a special technical feature of "An apparatus...that selects, on the basis of the channel information, from among the plurality of terminal apparatuses, a set of two or more terminal apparatuses suitable for spatial multiplexing or beamforming and...transmits, to a first node that performs scheduling about the terminal apparatuses, terminal set information indicating the set of two or more terminal apparatuses."

(Invention 4) claims 61-68

Claims 61-68 have no special technical feature which is same as or corresponding to claim 1 classified into Invention 1, claim 49 classified into Invention 2 or claim 53 classified into Invention 3.

Further, claims 61-68 are not dependent on claim 1.

Further, claims 61-68 have no relationship such that these claims are substantially same as or equivalent to any claim classified into Inventions 1-3.

Consequently, claims 61-68 cannot be classified into any one of Inventions 1-3.

Further, claims 61-68 are classified as Invention 4 because they have a special technical feature of "An apparatus...that transmits scheduling information to a second node that transmits a downlink signal to the terminal apparatus, wherein the scheduling information includes resource allocation information that indicates the pattern of a radio resource to be allocated to the terminal apparatus."

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015170226 A

**Non-patent literature cited in the description**

- 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description. *3GPP TS 36.300,* June 2015